(19) Europäisches Patentamt
European Patent Office
Office européen des brevets

(11) **EP 4 671 942 A1**

(12) **EUROPEAN PATENT APPLICATION**
published in accordance with Art. 153(4) EPC

(43) Date of publication:
**31.12.2025 Bulletin 2026/01**

(21) Application number: **23951849.1**

(22) Date of filing: **14.09.2023**

(51) International Patent Classification (IPC):
**G06F 3/0484** $^{(2022.01)}$    **G06F 3/0488** $^{(2022.01)}$
**G06F 3/01** $^{(2006.01)}$    **G06F 3/041** $^{(2006.01)}$

(52) Cooperative Patent Classification (CPC):
**G06F 3/01; G06F 3/041; G06F 3/0484;
G06F 3/0488**

(86) International application number:
**PCT/CN2023/118859**

(87) International publication number:
**WO 2025/054912 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Honor Device Co., Ltd.
Shenzhen, Guangdong 518040 (CN)**

(72) Inventors:
• **ZHANG, Wenli
Shenzhen, Guangdong 518040 (CN)**
• **SUN, Haowen
Shenzhen, Guangdong 518040 (CN)**
• **JIA, Xuemei
Shenzhen, Guangdong 518040 (CN)**
• **TIAN, Juncheng
Shenzhen, Guangdong 518040 (CN)**

(74) Representative: **Isarpatent
Patent- und Rechtsanwälte
Barth Hassa Peckmann & Partner mbB
Friedrichstraße 31
80801 München (DE)**

(54) **TOUCH OPERATION PROCESSING METHOD, DEVICE, AND STORAGE MEDIUM**

(57)    This application provides a touch operation processing method, a device, and a storage medium. In this method, when a touch operation is received, it is determined, by determining a number of touch points, in other words, based on a touch area, whether to filter the touch operation. When it is determined that the touch operation is a non-knuckle operation that needs to be filtered, an electronic device is set to not invoke a knuckle recognition algorithm. This can avoid invoking the knuckle recognition algorithm for each touch operation, thereby reducing occupation of system resources, and reducing system load.

**EP 4 671 942 A1**

**(Cont. next page)**

| aptouch_daemon | TP driver | | Input framework | |
|---|---|---|---|---|
| THP module | Coordinate node | dev/input/ node | EventHub | InputReader |

401. Each time aptouch_daemon senses a touch performed by a user on a screen, the THP module invokes a knuckle filtering algorithm to determine whether the current touch is a touch operation that needs to be filtered (a determining result is recorded as not_bypass information)

402. aptouch_daemon delivers the determined not_bypass information to the coordinate node in the TP driver through the THP module

not_bypass information →

403. The TP driver fills the not_bypass information in the 0$^{th}$ bit of a Bitmap field, and writes the Bitmap field into the coordinate node

404. The TP driver writes related data (including data of the Bitmap field) in the coordinate node into the dev/input/ node

—Related data→

405. The TP driver generates an Input event based on the related data cached in the dev/input/ node

—Input event→

406. InputReader reads the not_bypass information in the 0$^{th}$ bit in the Bitmap field

407. Whether the not_bypass information is 1

Yes

408. Invoke a knuckle recognition algorithm

No

409. Not invoke the knuckle recognition algorithm

FIG. 17

**Description**

## TECHNICAL FIELD

This application relates to the field of terminal technologies, and in particular, to a touch operation processing method, a device, and a storage medium.

## BACKGROUND

Currently, to facilitate user operations and improve user experience, more electronic devices support shortcut functions (hereinafter referred to as knuckle functions) implemented based on knuckle operations. After a knuckle function is enabled, each time an electronic device detects a screen touch operation, the electronic device triggers a knuckle recognition algorithm to determine whether this screen touch operation is a knuckle operation, to meet, at any time, a demand of a user for using the knuckle function.

However, most screen touch operations of the user are not aimed at using the knuckle function, in other words, the knuckle function is a low-probability operation in screen touch operations of the user. Therefore, this current way of invoking the knuckle recognition algorithm for each screen touch operation severely increases system basic load, and also increases a risk of affecting use experience of the user because a sliding track is displayed due to false recognition of a knuckle.

## SUMMARY

To resolve the foregoing technical problem, this application provides a touch operation processing method, a device, and a storage medium, to perform determining on each touch operation, to recognize some non-knuckle operations and filter the non-knuckle operations, thereby reducing invocation of a knuckle recognition algorithm, and reducing system basic load and false recognition cases.

According to a first aspect, this application provides a touch operation processing method, applied to an electronic device. The method includes: receiving a first touch operation of a user; detecting the first touch operation, to obtain a number of touch points corresponding to the first touch operation; generating a first identifier based on the number of touch points, where the first identifier is used to indicate whether to skip invoking a knuckle recognition algorithm; and when the first identifier is a first value, not invoking, by the electronic device, the knuckle recognition algorithm to perform recognition processing on the first touch operation; or when the first identifier is a second value, invoking, by the electronic device, the knuckle recognition algorithm to perform recognition processing on the first touch operation.

The electronic device is a device with a touchscreen.

The first touch operation may be considered as any touch operation performed by the user on the touchscreen of the electronic device.

The number of touch points is the number of touch points detected on the touchscreen in a scanning cycle when a touch operation occurs, and may be represented as TouchNum.

The first identifier may be considered as a newly added field used to describe whether to skip invoking the knuckle recognition algorithm, for example, the Bitmap field in the following embodiments.

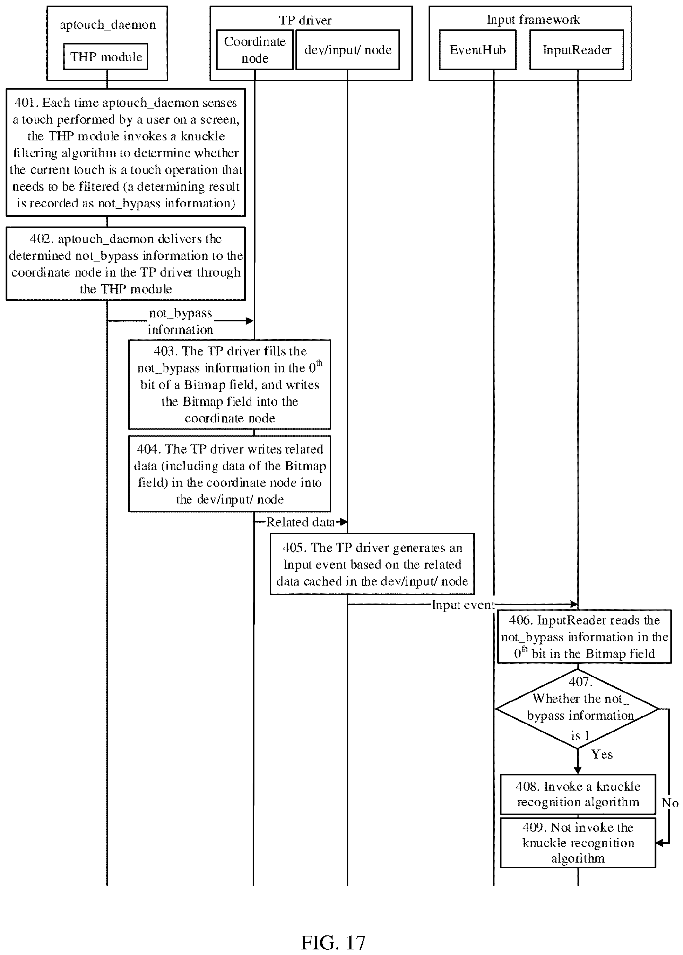

For generation of the first identifier, namely, the Bitmap field, refer to the following embodiment shown in FIG. 17. Details are not described herein.

The first value is, for example, "0" recorded in the $0^{th}$ bit in the Bitmap field, and the second value is, for example, "1" recorded in the $0^{th}$ bit in the Bitmap field.

For example, when the first identifier is the first value, this touch operation may be determined as a non-knuckle operation. When the first identifier is the second value, this touch operation may be a knuckle operation, or may be a non-knuckle operation. In this case, the knuckle recognition algorithm needs to be invoked to perform specific recognition processing.

Knuckle operations are, for example, a single-knuckle operation and a double-knuckle operation that are commonly known.

The single-knuckle operation may be, for example, that a single knuckle performs a double tap, a single knuckle performs a single tap and draws a circle, or a single knuckle performs a single tap and draws S.

The double-knuckle operation may be, for example, that double knuckles perform double taps.

The non-knuckle operation is a touch operation other than the current knuckle operation, for example, a tap operation or a sliding operation performed by using a finger.

When the first touch operation is a non-knuckle operation, in other words, when the first identifier is the first value, the electronic device does not invoke the knuckle recognition algorithm to perform recognition processing on the first touch operation, but still recognizes whether the first touch operation is an algorithm of a finger tap operation or sliding operation, to determine an operation that the current first touch operation is specifically, so that the electronic device makes a correct response to ensure user experience.

Therefore, each time a touch operation is received, the number of touch points corresponding to the touch operation is determined, and then it is determined, based on the number of touch points, whether the current touch operation is a non-knuckle operation, in other words, it is determined, based on a touch area, whether to filter the touch operation. When it is determined that the touch operation is a non-knuckle operation that needs to be filtered, the first identifier of the first value is generated; on the contrary, the first identifier of the second value is generated. In this way, when receiving an event corresponding to the touch operation, the electronic device can determine, based on a value of the first identifier, whether the knuckle recognition algorithm needs to be invoked this time. For example, when the first identifier is the first value, the knuckle recognition algorithm is not invoked. This can avoid invoking the knuckle recognition algorithm for each touch operation, thereby reducing occupation of system resources, and reducing system load.

In addition, because the number of times of invoking the knuckle recognition algorithm is greatly reduced, a risk of displaying a sliding running track on a screen interface due to false recognition is also reduced.

According to the first aspect, the generating a first identifier based on the number of touch points includes: when the number of touch points is greater than a preset number, generating the first identifier of the first value; when the number of touch points is equal to the preset number, generating the first identifier of the second value; or when the number of touch points is less than the preset number, generating the first identifier based on capacitance data corresponding to the first touch operation.

The preset number is determined based on the number of knuckles required by a knuckle function supported by the electronic device, and specifically, may be the maximum number of knuckles required by the knuckle function.

The capacitance data is capacitance data collected by a touch sensor, for example, a TP IC, in the touchscreen of the electronic device in a capacitance sampling mode.

The capacitance data used to determine whether the first operation is a non-knuckle operation may be original capacitance data collected by the TP IC, namely, capacitance data that is processed by using a THP algorithm/module, or may be target capacitance data obtained through processing by using the THP algorithm/module.

Therefore, each time a touch operation is received, first, the number of touch points corresponding to the touch operation is compared with the preset number, and then it is determined, based on a comparison result, whether the current touch operation is a non-knuckle operation, so that a non-knuckle operation can be fast excluded.

In addition, for a touch operation that cannot be excluded based on the number of touch points, determining is further performed based on capacitance data corresponding to the touch operation. Therefore, a processing speed is considered, and accuracy of a processing result is also ensured.

According to any one of the first aspect or the implementations of the first aspect, the generating the first identifier based on capacitance data corresponding to the first touch operation includes: obtaining original capacitance data corresponding to the first touch operation, where the original capacitance data is capacitance data that is not processed by using a touch processing algorithm; determining, based on the touch processing algorithm and the original capacitance data, a pressure value corresponding to the first touch operation; and generating the first identifier based on the pressure value.

The touch processing algorithm is the THP algorithm (module). Generally, the algorithm or functional module is implemented by being invoked by an application processor touch daemon (aptouch_daemon).

The original capacitance data is collected by the TP IC and then reported to a capacitance data cache in a touchscreen driver (TP driver) for caching, and then written into a dedicated capacitance processing node (for example, a /dev/thp* node). aptouch_daemon accesses the /dev/thp* node through the THP module to obtain the original capacitance data for processing.

The knuckle function needs to be triggered by the user by tapping the touchscreen at a specific force by using a knuckle, in other words, a factor of determining whether a touch operation is a knuckle operation is a pressure value of the screen touch. Therefore, when the number of touch points meets an element of a knuckle operation, determining is further performed on a pressure value element, so that a touch operation that does not meet the pressure value element can be further filtered, to further reduce frequency of invoking the knuckle recognition algorithm.

According to any one of the first aspect or the implementations of the first aspect, the determining, based on the touch processing algorithm and the original capacitance data, a pressure value corresponding to the first touch operation includes: determining a touch center point of the first touch operation based on the touch processing algorithm and the original capacitance data, where the touch center point is a point with a maximum capacitance; obtaining a capacitance of the touch center point and capacitances of M neighboring points adjacent to the touch center point from the original capacitance data, where M is an integer greater than 0; performing weighted summation on the M+9 obtained capacitances based on a preset weight; and multiplying a weighted summation result by a preset coefficient, to obtain the pressure value corresponding to the first touch operation.

The touch center point may also be represented as a peak point, namely, the point with the maximum capacitance.

If M is, for example, 8, M+1 is 9.

When M is 8, the nine obtained capacitances may form a $3 \times 3$ two-dimensional capacitance data matrix. All the capacitances in the capacitance data matrix may be sequentially denoted as $V_0$, $V_1$, $V_2$, $V_3$, $V_4$, $V_5$, $V_6$, $V_7$, and $V_8$ from top to bottom. $V_4$ is the touch center point (which may also be referred to as a center point for short). During specific implementation, the obtained capacitances of the nine points may be denoted as $V_i$, where $i \in [0,8]$.

The weight may be represented as $k_i$.

The coefficient may be represented as $\alpha$.

The pressure value (*Pressure*) corresponding to the first touch operation or any other touch operation may be determined according to the following formula:

$$Pressure = a * \sum_{i=0}^{8} \left( k_i * V_i \right).$$

According to any one of the first aspect or the implementations of the first aspect, the generating the first identifier based on the pressure value includes: when the pressure value is greater than a preset pressure threshold, generating the first identifier of the first value; or when the pressure value is less than or equal to the preset pressure threshold, determining whether the capacitance data corresponding to the first operation is valid; and when the capacitance data is valid, generating the first identifier of the second value; or when the capacitance data is invalid, generating the first identifier of the first value.

The preset pressure threshold may be determined based on a minimum pressure value required by the electronic device to touch the knuckle function, for example, may be set to 600.

Therefore, only when the pressure value of the touch operation is less than or equal to the preset pressure threshold, this touch operation is considered as an operation that may be a knuckle operation. When the pressure value is greater than the preset pressure threshold, it is directly considered that this touch operation is not a knuckle operation. Therefore, a touch operation that cannot be a knuckle operation is further filtered based on the pressure value corresponding to the screen touch operation, thereby further reducing frequency of invoking the knuckle recognition algorithm, and reducing system load.

According to any one of the first aspect or the implementations of the first aspect, the determining whether the capacitance data corresponding to the first operation is valid includes: determining a touch center point of the first touch operation based on the touch processing algorithm and the original capacitance data, where the touch center point is a point with a maximum capacitance; determining a distance from the touch center point to an edge of a current screen of the electronic device based on a preset dimension N, where N is an odd number; determining, based on coordinates of the touch center point, the distance, and maximum pixels of the current screen of the electronic device, whether the touch center point is located on the edge of the current screen of the electronic device; and when the touch center point is not located on the edge of the current screen of the electronic device, determining that the capacitance data corresponding to the first operation is valid; or when the touch center point is located on the edge of the current screen of the electronic device, determining that the capacitance data corresponding to the first operation is invalid.

A knuckle operation usually occurs in a middle region of the current screen of the electronic device, and a touch operation generated on the edge is usually a sliding operation. Therefore, it is determined whether the touch center point of the touch operation is located on the edge of the current screen of the electronic device, so that a non-touch operation such as a sliding operation can be filtered. This further reduces frequency of invoking the knuckle recognition algorithm, and reduces system load.

According to any one of the first aspect or the implementations of the first aspect, the distance from the touch center point to the edge of the current screen of the electronic device is determined based on the preset dimension N according to the following formula:

$$Dis=(N+1)/2-2.$$

Dis is the distance from the touch center point to the edge of the current screen of the electronic device, and N is an odd number and is determined based on a dimension of the target capacitance data expected to be extracted from the original capacitance data.

According to any one of the first aspect or the implementations of the first aspect, the determining, based on coordinates of the touch center point, the distance, and maximum pixels of the current screen of the electronic device, whether the touch center point is located on the edge of the current screen of the electronic device includes: determining an X edge coordinate value of an X-axis and a Y edge coordinate value of a Y-axis based on the distance and the maximum pixels; determining whether an X coordinate value of the touch center point on the X-axis is less than the distance, or determining whether the X coordinate value is greater than the X edge coordinate value; determining whether a Y coordinate value of the touch center point on the Y-axis is less than the distance, or determining whether the Y coordinate value is greater than the Y edge coordinate value; and when the X coordinate value is less than the distance or is greater than the X edge coordinate value, and the Y coordinate value is less than the distance or is greater than the Y edge coordinate value, determining that the touch center point is not located on the edge of the current screen of the electronic device; otherwise, determining that the touch center point is located on the edge of the current screen of the electronic device.

Only when neither of the coordinate values of the touch center point on the X-axis and the Y-axis fall on the edge of the screen, it is determined that the touch corresponding to the touch center point may be a knuckle operation, in other words, the knuckle recognition algorithm is considered to be used for recognition processing. A touch operation falls on the edge of the screen is directly determined as a sliding operation, the touch operation is filtered, and the knuckle recognition algorithm is not invoked. Therefore, a touch operation in a specific scenario is determined as a non-knuckle operation and is directly filtered, thereby further reducing frequency of invoking the knuckle recognition algorithm, and reducing system load.

In addition, because validity of the capacitance data is directly determined based on the original capacitance data, processing of extracting the target capacitance data from the original capacitance data does not need to be first performed, thereby reducing time and resources required for processing.

According to any one of the first aspect or the implementations of the first aspect, the X edge coordinate value of the X-axis and the Y edge coordinate value of the Y-axis are determined based on the distance and the maximum pixels according to the following formulas:

$$\text{X edge coordinate value} = curResolution.x - Dis - 1;$$

and

$$\text{Y edge coordinate value} = curResolution.y - Dis - 1.$$

curResolution.x is an X-axis maximum pixel, curResolution.y is a Y-axis maximum pixel, and Dis is the distance from the touch center point to the edge of the current screen of the electronic device.

According to any one of the first aspect or the implementations of the first aspect, the determining whether the capacitance data corresponding to the first operation is valid includes: extracting capacitance data from the original capacitance data based on the touch processing algorithm, and constructing a first capacitance matrix, where the first capacitance matrix is an N×N target capacitance matrix not padded with 0, and N is an odd number; when a number of pixels in the first capacitance matrix is less than or equal to a preset number of pixels, determining that the capacitance data corresponding to the first operation is invalid; or when the number of pixels in the first capacitance matrix is greater than the preset number of pixels, determining that the capacitance data corresponding to the first operation is valid.

The preset number of pixels is related to a dimension of the target capacitance matrix.

The number of pixels in the first capacitance matrix not padded with 0 is compared with the preset number of pixels, to fast determine validity of the capacitance data.

In addition, because validity of the capacitance data is directly determined based on the original capacitance data, processing of extracting the target capacitance data from the original capacitance data does not need to be first performed, thereby reducing time and resources required for processing.

According to any one of the first aspect or the implementations of the first aspect, the preset number of pixels is determined according to the following formula: Preset number of pixels=N*(N-2).

According to any one of the first aspect or the implementations of the first aspect, the determining whether the capacitance data corresponding to the first operation is valid includes: extracting capacitance data from the original capacitance data based on the touch processing algorithm, and constructing a first capacitance matrix, where the first capacitance matrix is an N×N target capacitance matrix not padded with 0, and N is an odd number; when the first capacitance matrix is not an N×N capacitance matrix, performing 0 padding on the first capacitance matrix, to obtain the N×N target capacitance matrix; obtaining capacitances of two vertices on a diagonal in the target capacitance matrix; and determining, based on the capacitances of the two vertices on the diagonal, whether the capacitance data corresponding to the first operation is valid.

Therefore, it can be fast determined, based on vertex values of a group of vertices on a diagonal, whether target capacitance data is valid, without paying attention to a capacitance at another position. This improves a processing speed, and also reduces occupation of system resources.

According to any one of the first aspect or the implementations of the first aspect, the obtaining capacitances of two vertices on a diagonal in the target capacitance matrix includes: obtaining capacitances of an upper left vertex and capacitances of a lower right vertex of the target capacitance matrix; or obtaining capacitances of an upper right vertex and capacitances of a lower left vertex of the target capacitance matrix.

According to any one of the first aspect or the implementations of the first aspect, the determining, based on the capacitances of the two vertices on the diagonal, whether the capacitance data corresponding to the first operation is valid includes: determining whether the capacitances of the two vertices on the diagonal are all valid capacitances; and when the capacitances of the two vertices on the diagonal are all valid values, determining that the capacitance data corresponding to the first operation is valid.

According to any one of the first aspect or the implementations of the first aspect, vertices in the target matrix include an edge corner point of the target matrix and a next vertex of the edge corner point along a diagonal; and the determining whether the capacitances of the two vertices on the diagonal are all valid capacitances includes: determining whether two capacitances of each vertex on the diagonal have a non-0 value; and when the two vertices on the diagonal each have a non-0 value, determining that the capacitance data corresponding to the first operation is valid.

According to any one of the first aspect or the implementations of the first aspect, the preset number, namely, TouchNum, is 2.

For example, knuckle operations are classified into a single-knuckle operation and a double-knuckle operation. The number of touch points corresponding to the single-knuckle operation is 1, and the number of touch points corresponding to the double-knuckle operation is 2. Therefore, as a possible implementation, the preset number can be set to 2. In other words, it can be determined that a scenario in which the number of touch points is greater than 2 is not a scenario of a knuckle operation.

According to any one of the first aspect or the implementations of the first aspect, after the invoking, by the electronic device, the knuckle recognition algorithm to perform recognition processing on the first touch operation, the method further includes: when determining that the first touch operation is a knuckle operation, setting time corresponding to the first touch operation to system time at which the first touch operation is received; or when determining that the first touch operation is not the knuckle operation, setting the time corresponding to the first touch operation to a default invalid value.

The default invalid value may be set to, for example, -1.

According to any one of the first aspect or the implementations of the first aspect, the method further includes: when receiving a second touch operation of the user, determining whether the time corresponding to the first touch operation is the default invalid value; when the time corresponding to the first touch operation is not the default invalid value, determining a time interval between the two touch operations based on system time at which the second touch operation is received and the time corresponding to the first touch operation; and when the time interval is less than a preset time interval threshold, setting the time corresponding to the first touch operation to the default invalid value, setting time corresponding to the second touch operation to the system time at which the second touch operation is received, and invoking the knuckle recognition algorithm to perform recognition processing on the second touch operation; otherwise, generating, based on the number of touch points and/or capacitance data corresponding to the second touch operation, a second identifier corresponding to the second touch operation, where the second identifier is used to indicate whether to skip invoking the knuckle recognition algorithm; and when the second identifier is a first value, not invoking, by the electronic device, the knuckle recognition algorithm to perform recognition processing on the second touch operation, and setting the time corresponding to the second touch operation to the default invalid value; or when the second identifier is a second value, invoking, by the electronic device, the knuckle recognition algorithm to perform recognition processing on the second touch operation, and setting the time corresponding to the second touch operation to the system time at which the second touch operation is received.

Therefore, for two consecutive touch operations, when the first touch operation meets three elements of a knuckle operation, namely, the number of touch points (TouchNum), a pressure value ( *Pressure*), and whether a capacitance is valid (IsCapValid()), a filtering threshold of the second touch operation that occurs immediately after the first touch operation is reduced, in other words, the foregoing three elements are not used for filtering, but a time interval between the two touch operations is directly considered. This can avoid filtering a knuckle operation whose action is not standard, and can also filter a non-knuckle operation that does not meet a requirement, thereby ensuring user operation experience, and also reducing frequency of invoking the knuckle recognition algorithm.

According to any one of the first aspect or the implementations of the first aspect, the method further includes: when the time corresponding to the first touch operation is the default invalid value, generating, based on the number of touch points and/or capacitance data corresponding to the second touch operation, a second identifier corresponding to the second touch operation; and when the second identifier is a first value, not invoking, by the electronic device, the knuckle recognition algorithm to perform recognition processing on the second touch operation, and setting the time corresponding to the second touch operation to the default invalid value; or when the second identifier is a second value, invoking, by the electronic device, the knuckle recognition algorithm to perform recognition processing on the second touch operation, and setting the time corresponding to the second touch operation to the system time at which the second touch operation is received.

According to any one of the first aspect or the implementations of the first aspect, when the first touch operation is a non-knuckle operation, the first touch operation is filtered, to be specific, when the value of the first identifier corresponding to the first touch operation is the first value, the electronic device invokes the knuckle recognition algorithm to perform recognition processing on the first touch operation, including: when the first identifier is the first value, not sending, to the touchscreen driver, the target capacitance data extracted from the original capacitance data corresponding to the first touch operation, and sending, to the touchscreen driver, coordinate data extracted from the original capacitance data corresponding to the first touch operation and the generated first identifier; generating, by the touchscreen driver, an input event of the first touch operation based on the first identifier and the coordinate data, and reporting the input event to an input event framework; reading, by an event reading module in the input event framework, the value of the first identifier in the input event; and when the first identifier is the first value, not notifying, by the event reading module, a knuckle module to invoke the knuckle recognition algorithm to perform recognition processing on the first touch operation; or when the first identifier is the second value, notifying, by the event reading module, the knuckle module in the input event framework to invoke the knuckle recognition algorithm to perform recognition processing on the first touch operation.

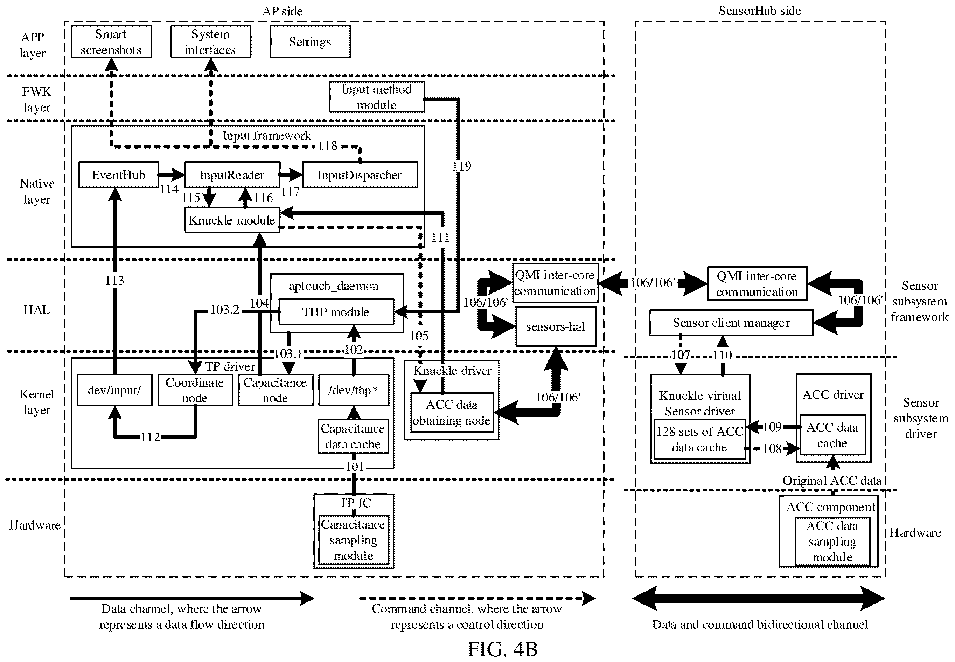

To be specific, a step in a branch corresponding to 103.1 in FIG. 4B is not performed, and only 103.2 and subsequent steps are performed. It needs to be determined, based on the value of the first identifier, whether to perform step 115 and step 116.

According to any one of the first aspect or the implementations of the first aspect, the first identifier is a field in a bitmap format, with a length of 32 bits; and one of the first value and the second value is selected to be recorded in the $0^{th}$ bit of the first identifier.

According to any one of the first aspect or the implementations of the first aspect, the method further includes: when receiving the first touch operation, obtaining height values of an input method hot region and a status of the current screen of the electronic device, where the height values include a coordinate value corresponding to an upper edge and a coordinate corresponding to a lower edge of the input method hot region, the status includes a portrait state and a landscape state, and the input method hot region is a distribution region of a keyboard corresponding to an input method in an interface currently displayed on the electronic device; when the status is the landscape state, converting the height values into height values in a coordinate system corresponding to the portrait state; performing resolution conversion on the height values in the coordinate system corresponding to the portrait state, to obtain target height values; determining, based on the status and the target height values, a region of the input method hot region on the current screen of the electronic device; and when coordinates of a touch point of the first touch operation fall within the region of the input method hot region on the current screen of the electronic device, determining that the first touch operation is a non-knuckle operation; otherwise, determining that the first touch operation is not a non-knuckle operation.

In the height values, the coordinate value corresponding to the upper edge of the input method hot region may be represented as Top, and the coordinate corresponding to the lower edge may be represented as Bottom.

The landscape state may include 90° landscape and 270° landscape (distinguished based on a position of a power button on a side frame of the electronic device).

For 90° landscape, Top existing before coordinate conversion may be represented as srcTopY, and Bottom existing before coordinate conversion may be represented as srcBottomY; and converted Top may be represented as targetRightX, and converted Bottom may be represented as targetLeftX.

For 90° landscape, conversion from srcTopY into targetRightX may be implemented according to a formula targetRightX=currentResolution.Y-srcTopY, and conversion from srcBottomY into targetLeftX may be implemented according to a formula targetLeftX=currentResolution. Y -srcBottom Y.

For 270° landscape, Top existing before coordinate conversion may be represented as srcTopY, and Bottom existing before coordinate conversion may be represented as srcBottomY; and converted Top may be represented as targetLeftX, and converted Bottom may be represented as targetRightX.

For 270° landscape, conversion from srcTopY into targetLeftX may be implemented according to a formula targetLeftX=srcTopY, and conversion from srcBottomY into targetRightX may be implemented according to a formula targetRightX=srcBottomY.

The resolution conversion is specifically conversion from low resolution to high resolution, and may be specifically implemented according to the following formulas:

    int xTarget=(int)((float)xSrc*maxResolution.x/currentResolution.x+0.5); and
    int yTarget=(int)((float)ySrc*maxResolution.y/currentResolution.y+0.5).

xTarget and yTarget are a target X-axis coordinate value and a target Y-axis coordinate value that are obtained after conversion, xSrc and ySrc are an original X-axis coordinate value and an original Y-axis coordinate value that exist before conversion, namely, for example, the foregoing Top and Bottom, maxResolution is maximum resolution, and currentResolution is current resolution.

According to a second aspect, this application provides a touch operation processing method. The method is applied to an electronic device and includes: receiving a first operation of a user; presenting a first interface of a first application in response to the first operation, where the first interface includes a first region and a second region, and the first region is a distribution region of a keyboard corresponding to an input method in the first interface; receiving a second operation of the user in the first region; and presenting input information of the user in the first region in response to the second operation. When the second operation is received, a knuckle recognition algorithm is not invoked to perform recognition processing on the second operation.

The first application may be any application that can invoke the input method and display the keyboard corresponding to the input method, such as a notebook application or an instant messaging application. Examples are not listed one by one herein. This is not limited in this application.

The first interface is, for example, a chat interface of an instant messaging application.

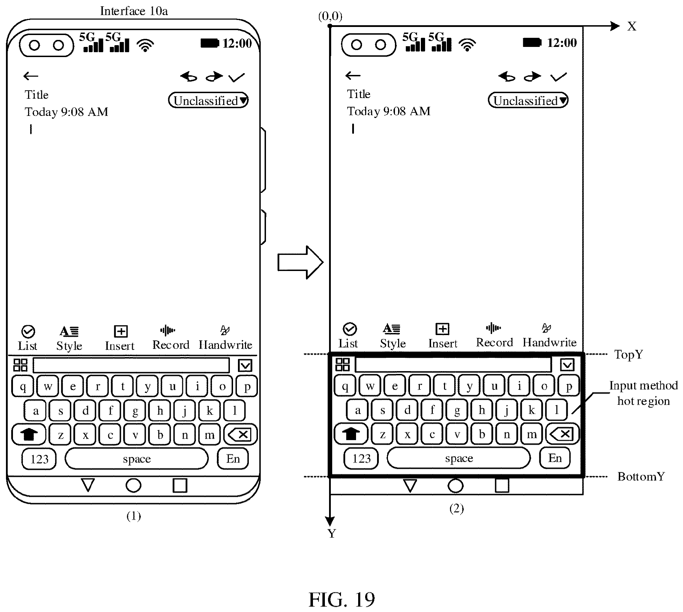

The first region, namely, the input method hot region in the following embodiments, is, for example, a keyboard distribution region shown in FIG. 19 to FIG. 22.

The second region may be a region used to display content, such as a region for displaying information such as chat content or recorded notes, and during actual application, may be understood as a region other than the first region in the first interface.

The first operation is, for example, a tap operation on the first application.

The second operation is the same as the first touch operation in any one of the first aspect or the implementations of the first aspect, and may be considered as any touch operation performed by the user on a touchscreen of the electronic device.

The input information of the user is displayed in the first region in response to the second operation. For example, a touched character of the second operation is displayed in an input box of the keyboard.

Therefore, for a touch operation that occurs in the input method hot region, the knuckle recognition algorithm is prevented from being invoked in a background program, thereby reducing unnecessary redundant actions, and reducing system load.

According to the second aspect, the method further includes: receiving a third operation of the user in the second region; and invoking the knuckle recognition algorithm to recognize the third operation, to obtain a recognition result of the third operation.

The third operation may also be any touch operation performed by the user on the touchscreen of the electronic device.

In this way, when a touch operation occurs in a region other than the input method hot region, the knuckle recognition algorithm is normally invoked for recognition processing, so that a knuckle operation can be prevented from being missed, to ensure a timely response to a knuckle operation performed by the user.

According to any one of the second aspect or the implementations of the second aspect, when the recognition result of the third operation is a screenshot operation, a screenshot is performed on the first interface; or when the recognition result of the third operation is a screen recording operation, screen recording is performed on the first interface.

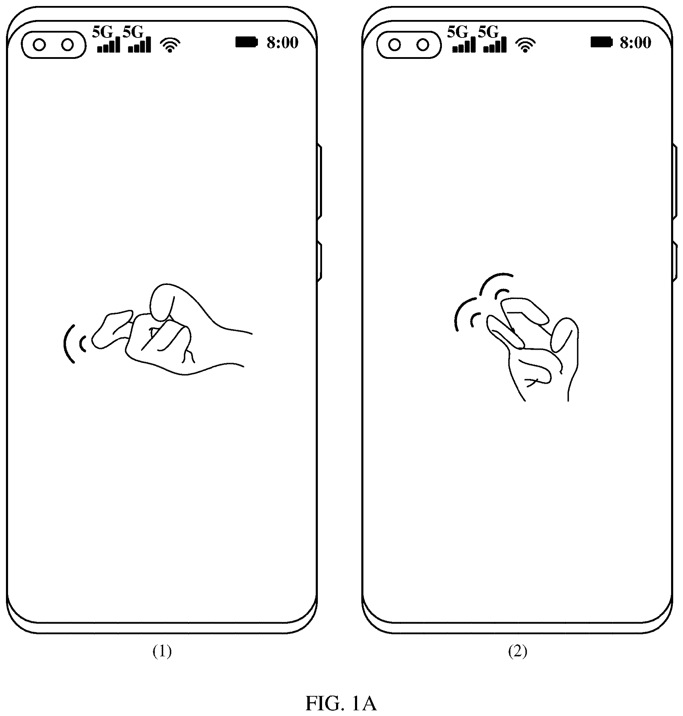

When the recognition result indicates that the third operation is an operation, shown in FIG. 1A(1), in which a single knuckle performs a double tap, the electronic device performs a full-screen screenshot on the first interface in response to the third operation.

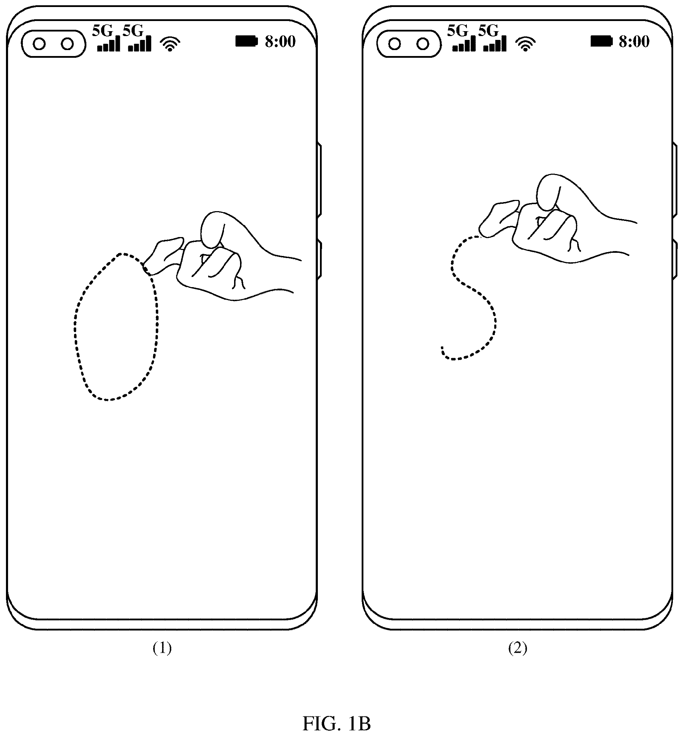

When the recognition result indicates that the third operation is an operation, shown in FIG. 1B(1), in which a single knuckle performs a single tap and then draws a circle, the electronic device perform a screenshot on a circled region in the first interface in response to the third operation.

When the recognition result indicates that the third operation is an operation, shown in FIG. 1B(2), in which a single knuckle performs a single tap and then draws S, the electronic device performs a scrolling screenshot on the first interface in response to the third operation.

When the recognition result indicates that the third operation is an operation, shown in FIG. 1A(2), in which double knuckles perform double taps, the electronic device performs screen recording on the first interface in response to the third operation.

According to any one of the second aspect or the implementations of the second aspect, the method further includes: receiving a fourth operation of the user; switching the first interface to a second interface in response to the fourth operation, where the second interface does not include the first region; receiving a fifth operation of the user in the second interface; and invoking the knuckle recognition algorithm to recognize the fifth operation, to obtain a recognition result of the fifth operation.

The fifth operation may also be any touch operation performed by the user on the touchscreen of the electronic device.

The recognition result may be the same as the recognition result of the third operation in the second aspect.

In this way, when a touch operation occurs in an interface that does not include the input method hot region, the knuckle recognition algorithm is normally invoked for recognition processing, so that a knuckle operation can be prevented from being missed, to ensure a timely response to a knuckle operation performed by the user.

According to any one of the second aspect or the implementations of the second aspect, the invoking the knuckle recognition algorithm to perform recognition processing on the received operation includes: determining a value of a first identifier corresponding to the received operation, where the first identifier is used to indicate whether to skip invoking the knuckle recognition algorithm; and when the first identifier is a first value, not invoking the knuckle recognition algorithm to perform recognition processing on the received operation; or when the first identifier is a second value, invoking the knuckle recognition algorithm to perform recognition processing on the received operation.

When the electronic device invokes the knuckle recognition algorithm to perform recognition processing on the received operation, the operation on which recognition processing is performed is the foregoing operation that does not occur in the input method hot region, such as the third operation or the fifth operation.

The first identifier is the same as the first identifier or the second identifier in any one of the first aspect or the implementations of the first aspect, and is specifically the Bitmap field in the following embodiments.

The first value is, for example, "0" recorded in the $0^{th}$ bit in the Bitmap field, and the second value is, for example, "1" recorded in the $0^{th}$ bit in the Bitmap field.

In this way, when the received operation is not applied to the input method hot region, it is further determined, based on the value of the first identifier corresponding to the current operation, whether to invoke the knuckle recognition algorithm, thereby further reducing unnecessary redundant actions, and reducing system load.

According to a third aspect, this application provides an electronic device. The electronic device includes a memory and a processor, and the memory is coupled to the processor. The memory stores program instructions, and when the program instructions are executed by the processor, the electronic device is enabled to perform the instructions of the method in any one of the first aspect or the possible implementations of the first aspect.

An implementation of the third aspect corresponds to any one of the first aspect or the implementations of the first aspect. For technical effects corresponding to the implementation of the third aspect, refer to the technical effects corresponding to any one of the first aspect or the implementations of the first aspect, or the technical effects corresponding to any one of the second aspect or the implementations of the second aspect. Details are not described herein again.

According to a fourth aspect, this application provides a computer-readable medium, configured to store a computer program. The computer program includes instructions for performing the method in any one of the first aspect or the possible implementations of the first aspect.

An implementation of the fourth aspect corresponds to any one of the first aspect or the implementations of the first aspect. For technical effects corresponding to the implementation of the fourth aspect, refer to the technical effects corresponding to any one of the first aspect or the implementations of the first aspect, or the technical effects corresponding to any one of the second aspect or the implementations of the second aspect. Details are not described herein again.

According to a fifth aspect, this application provides a computer program product. When the computer program product runs on a computer, the computer is enabled to perform the instructions of the method in any one of the first aspect or the possible implementations of the first aspect.

An implementation of the fifth aspect corresponds to any one of the first aspect or the implementations of the first aspect. For technical effects corresponding to the implementation of the fifth aspect, refer to the technical effects corresponding to any one of the first aspect or the implementations of the first aspect, or the technical effects corresponding to any one of the second aspect or the implementations of the second aspect. Details are not described herein again.

According to a sixth aspect, this application provides a chip system. The chip system includes a processor and a memory. The memory stores program instructions. When the program instructions are executed by the processor, the chip system is enabled to perform the instructions of the method in any one of the first aspect or the possible implementations of the first aspect.

An implementation of the sixth aspect corresponds to any one of the first aspect or the implementations of the first aspect. For technical effects corresponding to the implementation of the sixth aspect, refer to the technical effects corresponding to any one of the first aspect or the implementations of the first aspect, or the technical effects corresponding to any one of the second aspect or the implementations of the second aspect. Details are not described herein again.

**BRIEF DESCRIPTION OF DRAWINGS**

FIG. 1A is a schematic diagram of a scenario in which a user performs a knuckle operation according to an embodiment of this application;

FIG. 1B is a schematic diagram of another scenario in which a user performs a knuckle operation according to an embodiment of this application;

FIG. 2 is a schematic diagram of a hardware structure of an electronic device according to an embodiment of this application;

FIG. 3 is a schematic diagram of an appearance of an electronic device according to an embodiment of this application;

FIG. 4A is a schematic diagram of a software structure of an electronic device supporting invocation of a knuckle recognition algorithm according to an embodiment of this application;

FIG. 4B is a schematic diagram of interaction between functional modules in software and hardware structures in a process of invoking a knuckle recognition algorithm according to an embodiment of this application;

FIG. 5 is a schematic diagram of a software structure of an electronic device implementing a touch operation processing method according to an embodiment of this application;

FIG. 6 is a schematic diagram of determining a pressure value based on capacitances generated through a screen touch according to an embodiment of this application;

FIG. 7 is a schematic diagram of parameters determined based on capacitances generated through a screen touch according to an embodiment of this application;

FIG. 8 is a schematic diagram of corresponding capacitance data obtained after sliding screen touch operations are separately performed from upper, lower, left, and right edges of a touchscreen of an electronic device according to an embodiment of this application;

FIG. 9 is a schematic diagram of a filtering procedure for a non-knuckle operation in a single screen touch operation according to an embodiment of this application;

FIG. 10 is a schematic diagram of vertices of four corners in a $7{\times}7$ capacitance matrix according to an embodiment of this application;

FIG. 11 is a schematic diagram of determining, based on values of vertices of four corners specified in a $7{\times}7$ capacitance matrix, whether a capacitance is valid according to an embodiment of this application;

FIG. 12 is a schematic diagram of determining, based on values of vertices of four corners specified in a $7{\times}7$ capacitance matrix, whether a capacitance is valid according to an embodiment of this application;

FIG. 13 is a schematic diagram of a distance between a peak point and a boundary of two columns of 0 according to an embodiment of this application;

FIG. 14 is a schematic diagram of determining, based on an interval to which a coordinate of a peak point belongs, whether a screen touch operation is an edge touch operation according to an embodiment of this application;

FIG. 15 is a schematic diagram of a filtering procedure for a non-knuckle operation in two consecutive screen touch operations according to an embodiment of this application;

FIG. 16 is a schematic diagram of a newly added field used to indicate whether this screen touch operation needs to be filtered according to an embodiment of this application;

FIG. 17 is a schematic diagram of implementing a non-knuckle operation filtering procedure based on the newly added field in FIG. 16 according to an embodiment of this application;

FIG. 18 is a schematic diagram of implementing a non-knuckle operation filtering procedure when a screen touch operation occurs in an input method hot region according to an embodiment of this application;

FIG. 19 is a schematic diagram of obtaining original height values of an input method hot region according to an embodiment of this application;

FIG. 20 is a schematic diagram of distinguishing between 90° and 270° rotations of a display interface of an electronic device according to an embodiment of this application;

FIG. 21 is a schematic diagram of coordinates of an input method hot region that are obtained after 90° landscape is converted into portrait according to an embodiment of this application; and

FIG. 22 is a schematic diagram of coordinates of an input method hot region that are obtained after 270° landscape is converted into portrait according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by persons of ordinary skill in the art based on embodiments of this application without creative efforts shall fall within the protection scope of this application.

In the specification, the term "and/or" is merely used to describe an association relationship between associated objects, and indicates that three relationships may exist. For example, A and/or B may indicate the following three cases: Only A exists, both A and B exist, and only B exists.

In the specification and claims of embodiments of this application, the terms such as "first" and "second" are intended to distinguish between different objects, but are not intended to describe a particular order of the objects. For example, a first target object, a second target object, and the like are intended to distinguish between different target objects, and are not intended to describe a particular order of the target objects.

In embodiments of this application, words such as "an example" or "for example" are used to represent giving an example, an illustration, or a description. Any embodiment or design solution described as "an example" or "for example" in embodiments of this application should not be explained as being more preferred or having more advantages than another embodiment or design solution. Exactly, use of the words such as "an example" or "for example" is intended to present a related concept in a specific manner.

In the descriptions of embodiments of this application, unless otherwise stated, "a plurality of" means two or more. For example, a plurality of processing units mean two or more processing units, and a plurality of systems mean two or more systems.

Currently, to facilitate user operations and improve user experience, more electronic devices support shortcut functions (hereinafter referred to as knuckle functions) implemented based on knuckle operations.

For example, in some possible implementations, as shown in FIG. 1A(1), after a knuckle function is enabled, a user may implement a full-screen screenshot by using an operation in which a single knuckle fast performs a double tap. To be specific, the user uses the single knuckle to apply a little force to fast double-tap a touchscreen of an electronic device, to capture a current screen interface.

For example, in some other possible implementation, as shown in FIG. 1A(2), after a knuckle function is enabled, a user may implement screen recording by using an operation in which double knuckles fast perform double taps. To be specific, the user uses the double knuckles to apply a little force to fast double-tap a touchscreen of an electronic device, to start a screen recording tool to record a current screen interface.

For example, in some other possible implementations, as shown in FIG. 1B(1), after a knuckle function is enabled, a user may implement a partial screenshot by using an operation in which a single knuckle taps a touchscreen and draws a circle. To be specific, the user uses the single knuckle to apply a little force to single-tap the touchscreen of an electronic device and then draw a circle, to capture a screen interface in a circled region.

For example, in some other possible implementations, as shown in FIG. 1B(2), after a knuckle function is enabled, a user may implement a scrolling screenshot by using an operation in which a single knuckle taps a touchscreen and draws S. To be specific, the user uses the single knuckle to apply a little force to single-tap the touchscreen of an electronic device and then draw S, to scroll through a current screen interface and perform a screenshot.

It should be understood that the foregoing descriptions are merely examples listed for a better understanding of the technical solutions of this embodiment, and are not considered as a unique limitation on this embodiment. During specific implementation, if there is another knuckle function implemented based on a knuckle operation, the knuckle function is also applicable to the technical solutions provided in this embodiment of this application.

It should be noted that, to implement the foregoing various knuckle functions, after a knuckle function is enabled, each time an electronic device detects a screen touch operation, the electronic device triggers a knuckle recognition algorithm to determine whether this screen touch operation is a knuckle operation, to meet, at any time, a demand of a user for using the knuckle function.

However, most screen touch operations of the user are not aimed at using the knuckle function, in other words, the knuckle function is a low-probability operation in screen touch operations of the user. However, to make a correct response to each demand of the user for using the knuckle function, the electronic device has to invoke the knuckle recognition algorithm for each screen touch operation to determine whether this screen touch operation is a knuckle operation, namely, a knuckle screen touch event.

Therefore, this current way of invoking the knuckle recognition algorithm for each screen touch operation severely increases system basic load, and also increases a risk of affecting use experience of the user because a sliding track is displayed due to false recognition of a knuckle, for example, a normal sliding operation is recognized as the knuckle operation shown in FIG. 1B(1) or (2), and therefore a moving track of the sliding operation is displayed on a current screen interface.

In view of this, this application provides a non-knuckle operation filtering solution implemented based on a feature and a use scenario of a screen touch operation of a user, to perform determining on each touch operation, to recognize non-knuckle operations in a specific screen touch operation feature and use scenario and filter the recognized non-knuckle operations (not invoke a knuckle recognition algorithm), thereby reducing invocation of the knuckle recognition algorithm, and reducing system basic load and false recognition cases.

To facilitate understanding of the knuckle operation and the non-knuckle operation in embodiments of this application, the following provides specific descriptions.

Specifically, in technical solutions provided in embodiments of this application, the knuckle operation is the touch operation shown in FIG. 1A or FIG. 1B. To be specific, a touchscreen is touched by using a knuckle, so that an electronic device makes a corresponding response. The non-knuckle operation is a touch operation other than the knuckle operation shown in FIG. 1A or FIG. 1B, for example, a sliding operation or a tap operation performed on the touchscreen by using a finger pulp.

For a better understanding of the technical solutions provided in embodiments of this application, before the technical solutions in embodiments of this application are described, a hardware structure of an electronic device to which embodiments of this application are applicable and appearances of some electronic devices are first described with reference to the accompanying drawings.

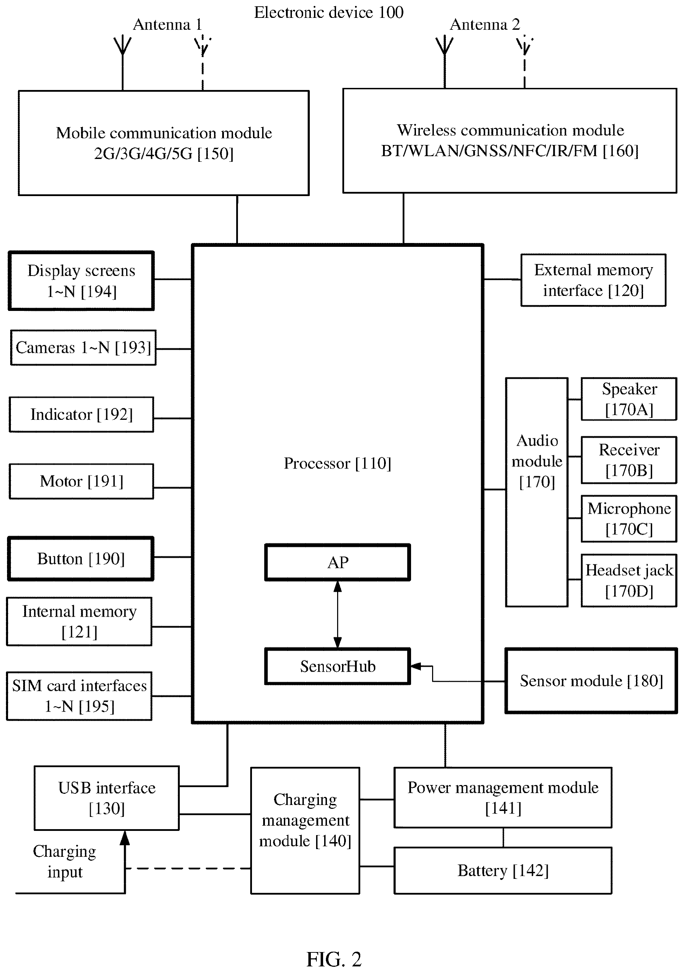

An electronic device to which the non-knuckle operation filtering solution provided in embodiments of this application is applicable is, for example, an electronic device with a touchscreen, such as a mobile phone, a tablet computer, a wearable device, a vehicle-mounted device, or a notebook computer. Examples are not listed one by one herein. A specific type of the electronic device is not limited in embodiments of this application. For ease of description, a mobile phone is used as an example for description in FIG. 2.

Referring to FIG. 2, an electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170 (including a speaker 170A, a receiver 170B, a microphone 170C, a headset jack 170D, and the like), a sensor module 180, a button 190, a motor 191, an indicator 192, a camera 193, a display screen 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and a smart sensor hub (SensorHub). Examples are not listed one by one herein. This is not limited in this application.

The foregoing application processor is configured to, for example, output a sound signal through an audio device (not limited to the speaker 170A, the receiver 170B, or the like), display an image or a video through the display screen 194, or perform recognition processing on a touch operation.

In addition, it should be further noted that, for the processor 110 including the foregoing processing units, in some implementations, different processing units may be independent components. In other words, each processing unit may be considered as one processor. In some other implementations, different processing units may alternatively be integrated into one or more processors.

It should be understood that the foregoing descriptions are merely examples listed for a better understanding of the technical solutions of this embodiment, and are not considered as a unique limitation on this embodiment.

In addition, in some implementations, the processor 110 may further include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. Examples are not listed one by one herein. This is not limited in this application.

In addition, a memory may be further disposed in the processor 110, and is configured to store instructions and data. In some implementations, the memory in the processor 110 is a cache. The memory may store an instruction or data that is just used or cyclically used by the processor 110. If the processor 110 needs to reuse the instruction or the data, the processor 110 may directly invoke the instruction or the data from the memory. This avoids repeated access and reduces waiting time of the processor 110, thereby improving system efficiency.

The external memory interface 120 may be configured to be connected to an external storage card, for example, a Micro SD card, to expand a storage capability of the electronic device 100. The external storage card communicates with the processor 110 through the external memory interface 120, to implement a data storage function. For example, a file such as music, a video, or screen data captured or recorded based on a knuckle operation is stored in the external storage card.

The internal memory 121 may be configured to store a computer-executable program code. The executable program code includes instructions. The processor 110 runs the instructions stored in the internal memory 121, to perform various function applications and data processing of the electronic device 100. The internal memory 121 may include a program storage region and a data storage region. The program storage region may store an operating system, an application required by at least one function (for example, a sound playback function, an image playback function, and the knuckle function in embodiments of this application), and the like. The data storage region may store data (for example, screen data captured or recorded based on a knuckle operation) created in a process of using the electronic device 100, and the like. In addition, the internal memory 121 may include a high-speed random access memory, and may further include a nonvolatile memory, for example, at least one disk storage device, a flash storage device, or a universal flash storage (universal flash storage, UFS).

The charging management module 140 is configured to receive charging input from a charger. The charger may be a wireless charger, or may be a wired charger. In some implementations of wired charging, the charging management module 140 may receive charging input from a wired charger through the USB interface 130. In some implementations of wireless charging, the charging management module 140 may receive wireless charging input through a wireless charging coil of the electronic device 100. When charging the battery 142, the charging management module 140 may further supply power to the electronic device through the power management module 141.

The power management module 141 is configured to be connected to the battery 142, the charging management module 140, and the processor 110. The power management module 141 receives input from the battery 142 and/or the charging management module 140, and supplies power to the processor 110, the internal memory 121, an external memory, the display screen 194, the camera 193, the wireless communication module 160, and the like. The power management module 141 may be further configured to monitor parameters such as a battery capacity, the number of battery cycles, and a battery health status (leakage or impedance). In some other implementations, the power management module 141 may alternatively be disposed in the processor 110. In some other implementations, the power management module 141 and the charging management module 140 may alternatively be disposed in a same component.

Still referring to FIG. 2, for example, a wireless communication function of the electronic device 100 may be implemented by using the antenna 1, the antenna 2, the mobile communication module 150, the wireless communication module 160, the modem processor, the baseband processor, and the like.

Still referring to FIG. 2, for example, the mobile communication module 150 may provide a solution for wireless communication that is applied to the electronic device 100 and that includes 2G/3G/4G/5G and the like. The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like.

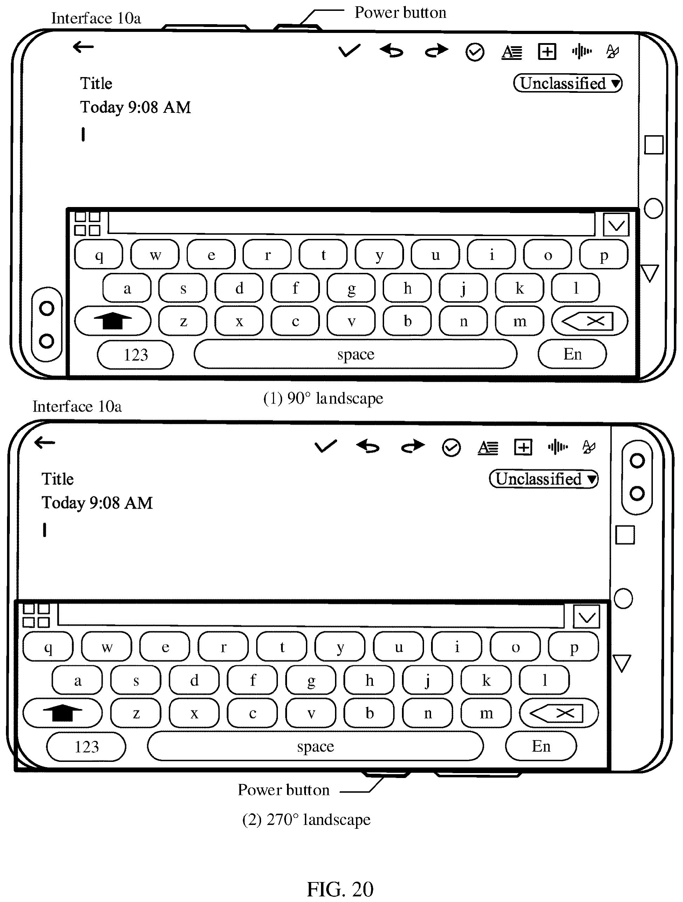

The button 190 includes a power on button/power button, a volume button, and the like. The button 190 may be a mechanical button, or may be a touch button. The electronic device 100 may receive button input and generate signal input related to user settings and function control of the electronic device 100. Specifically, in the technical solutions provided in embodiments of this application, a rotation degree of the electronic device 100 may be recognized based on a position of a button, for example, the power on button/power button (Power button). For details, refer to the descriptions in the embodiment shown in FIG. 20. Details are not described herein.

The motor 191 may generate a vibration prompt. The motor 191 may be configured to provide an incoming-call vibration prompt, and may be further configured to provide touch vibration feedback. For example, touch operations applied to different applications (for example, photographing and audio playback) may correspond to different vibration feedback effects. The motor 191 may also correspond to different vibration feedback effects for touch operations applied to different regions of the display screen 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may be further configured to indicate a message, a missed call, a notification, and the like.

The display screen 194 is configured to display an image, a video, and the like. The display screen 194 includes a display panel. In some implementations, the electronic device 100 may include one or N display screens 194, where N is a positive integer greater than 1.

In addition, for the sensor module 180 integrated into the electronic device 100, in some implementations, the sensor module 180 may include a pressure sensor, a gyroscope sensor, a barometric pressure sensor, a magnetic sensor, an acceleration transducer, a distance sensor, an optical proximity sensor, a fingerprint sensor, a temperature sensor, a touch sensor, an ambient light sensor, a bone conduction sensor, and the like. Examples are not listed one by one herein. This is not limited in this application.

Specifically, in the technical solutions provided in embodiments of this application, the sensor module 180 needs to include at least a touch sensor that can sense a touch operation and a motion sensor that can sense motion data generated in a touch process, such as an acceleration transducer (acceleration transducer, ACC), a gyroscope, or a geomagnetic sensor. For ease of description, in this embodiment, for example, the motion sensor is an ACC component, and the generated motion data is ACC data.

For example, in some implementations, the touch sensor is, for example, a touchpanel integrated circuit (Touchpanel integrated circuit, TP IC). The TP IC may be integrated into the display screen 194. The display screen 194 in this form may be described as a touchscreen/touchpanel (Touchpanel, TP), and is uniformly described as a touchscreen below for ease of description.

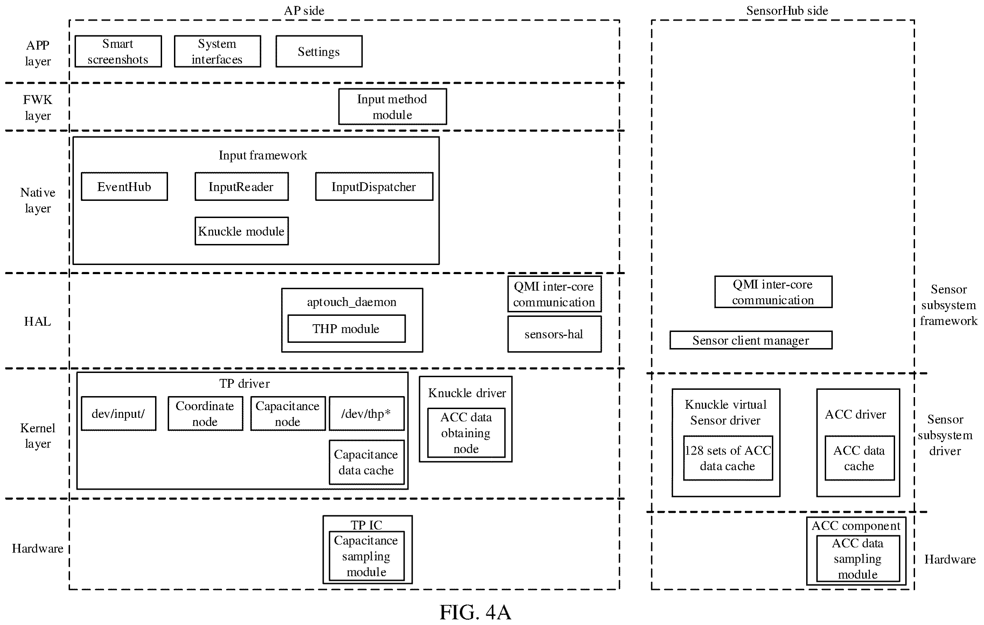

For details of functions of the TP IC and the ACC component in the electronic device 100 in the non-knuckle operation filtering solution provided in embodiments and interaction with other functional modules, refer to the following description part of the embodiment shown in FIG. 4A. Details are not described herein.

The hardware structure of the electronic device 100 is not further described. It should be understood that the electronic device 100 shown in FIG. 2 is only an example. During specific implementation, the electronic device 100 may have more or fewer components than those shown in the figure, may combine two or more components, or may have different component configurations. The components shown in FIG. 2 may be implemented in hardware that includes one or more signal processing and/or application-specific integrated circuits, software, or a combination of hardware and software.

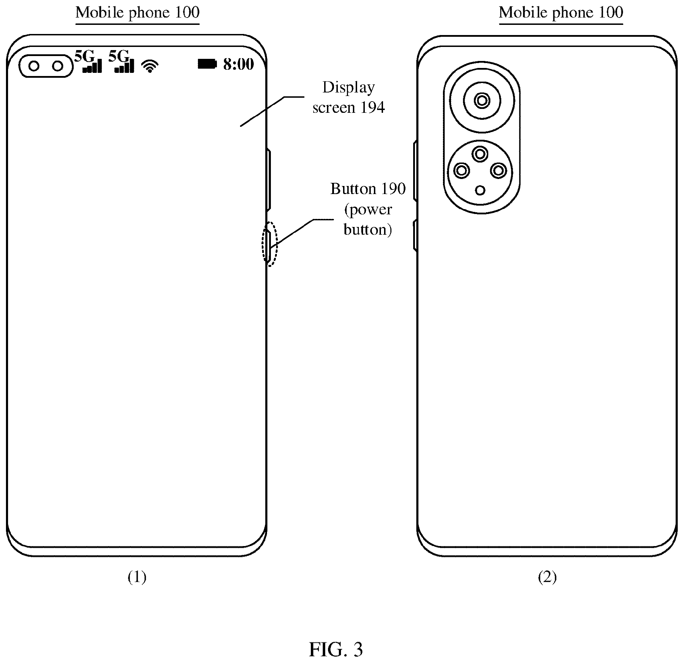

In addition, it should be noted that, the electronic device 100 of the hardware structure shown in FIG. 2, for example, a mobile phone, may be viewed from the outside as a mobile phone 100 shown in FIG. 3. For example, as a possible implementation, a button 190 (specifically, a power button) may be located on a side frame of the mobile phone 100.

Referring to FIG. 3(1), for example, as a possible implementation, the power button may be located on a right side frame of a display screen (as seen from a rear housing, as shown in FIG. 3(2), the power button is located on a left side frame of the rear housing).

It should be understood that the foregoing descriptions are merely examples listed for a better understanding of the technical solutions of this embodiment, and are not considered as a unique limitation on this embodiment.

To better understand a software structure of the electronic device 100 shown in FIG. 2, the following describes the software structure of the electronic device 100. Before the software structure of the electronic device 100 is described, an architecture that may be used by a software system of the electronic device 100 is first described.

Specifically, during actual application, the software system of the electronic device 100 may use a layered architecture, an event-driven architecture, a microkernel architecture, a microservice architecture, or a cloud architecture.

In addition, it may be understood that a software system currently used by a mainstream electronic device includes but is not limited to a Windows system, an Android system, and an iOS system. For ease of description, an Android system of a layered architecture is used as an example in embodiments of this application to describe the software structure of the electronic device 100.

In addition, subsequently, the non-knuckle operation filtering solution provided in embodiments of this application are also applicable to another system during specific implementation.

FIG. 4A is a block diagram of a software structure that can recognize a knuckle operation in the current electronic device 100.

As shown in FIG. 4A, in the layered architecture of the electronic device 100, software is divided into several layers, and each layer has a clear role and task. Layers communicate with each other through a software interface. In some implementations, the Android system is divided into five layers: an application (Applications, APP) layer, an application framework (Application Framework, FWK) layer (which may be understood as a system service framework), Android runtime (Android runtime) and a system library (a native framework and a runtime environment, which may also be referred to as a Native layer), a hardware abstraction layer (Hardware Abstraction Layer, HAL), and a kernel (Kernel) layer from top to bottom.

In addition, it should be noted that, in technical solutions of knuckle operation recognition, some operations are implemented on an AP (application processor) side, and some operations are implemented by a low-power processor, which may also be referred to as a smart sensor hub (SensorHub).

For the AP side, an overall system architecture of the AP side may be divided into the foregoing five layers. For a SensorHub side, a layered architecture of the SensorHub side may be sequentially a Sensor subsystem framework and a Sensor subsystem driver from top to bottom.

The APP layer may include a series of application packages. The FWK provides application programming interfaces (application programming interface, API) and programming frameworks for applications at the APP layer. In some implementations, these programming interfaces and programming frameworks may be described as functions. The Native layer provides some native services and common system libraries. The HAL is configured to encapsulate a hardware driver and provide a unified interface for an upper-layer framework. The Kernel layer is a kernel layer of an operating system, and the layer includes various hardware drivers.

Still referring to FIG. 4A, for example, for the AP side, all the foregoing five layers have corresponding functional modules.

The APP layer may include applications such as Smart screenshots, System interfaces, and Settings.

For example, in a possible implementation, operations such as enabling and disabling a knuckle function may be implemented through a function entry provided in the Settings application.

For example, in another possible implementation, operations such as enabling and disabling a knuckle function may be implemented through a function entry provided in a pull-down notification bar.

It should be understood that the foregoing descriptions are merely examples listed for a better understanding of the technical solutions of this embodiment, and are not considered as a unique limitation on this embodiment.

For example, when a knuckle function is enabled, when the user performs a knuckle operation, a screenshot may be implemented by using the Smart screenshots application, and a motion track may be displayed on a screen interface by using the System interfaces application.

Still referring to FIG. 4A, for example, the FWK layer may include an input method module. Specifically, during actual application, the FWK layer may further include other functional modules, such as a window manager, a content provider, a view system, a phone manager, and a resource manager. Examples are not listed one by one herein. This is not limited in this application.

Still referring to FIG. 4A, for example, the Native layer may include an input event module (Input module). The Input module may include an event hub (EventHub), an event reading module (InputReader), an event dispatch module (InputDispatcher), and a knuckle module.

EventHub is an event collection and processing service. In a process of recognizing a knuckle operation, EventHub may store an Input event reported by a TP driver.

InputReader is configured to obtain, from EventHub, an Input event generated on a touchscreen, and invoke the knuckle module to determine, based on a knuckle recognition algorithm, whether this touch operation is a knuckle operation.

The knuckle module is further configured to return a determining result (a knuckle recognition result) to InputDispatcher. When determining, based on the knuckle recognition result, that this touch operation is a knuckle operation, InputDispatcher invokes a corresponding App, for example, the Smart screenshots application or the System interfaces application, to implement an operation such as a screenshot or screen recording, and provides feedback for the user.

Still referring to FIG. 4A, for example, the HAL may include an application processor daemon module (aptouch_daemon). aptouch_daemon may include a touch host process module (Touch Host Process, THP module).

The THP module is configured to process capacitance data provided by the TP driver, to obtain capacitance data that meets a $7\times7$ matrix form required for knuckle operation recognition, coordinate data, and the like.

Still referring to FIG. 4A, for example, the Kernel layer may include the TP driver and a knuckle driver.

The TP driver may include a plurality of functional nodes, for example, a capacitance data cache for caching unprocessed capacitance data (original capacitance data), a /dev/thp* node for storing the original capacitance data, a capacitance node for storing capacitance data in a $7\times7$ matrix form, a coordinate node for storing coordinate data, and a /dev/input node for generating an Input event.

The knuckle driver may include an ACC data obtaining node.

Still referring to FIG. 4A, for example, the original capacitance data is specifically collected by a capacitance sampling module in a TP IC and reported to the capacitance data cache in the TP driver.

Still referring to FIG. 4A, for example, for the SensorHub side, a scenario involving knuckle recognition mainly relates to functional modules in the Sensor subsystem framework and the Sensor subsystem driver, and a hardware component, such as an ACC component.

Still referring to FIG. 4A, for example, the Sensor subsystem driver may include an ACC driver.

The ACC driver may include an ACC data cache. The ACC data cache may be configured to cache original ACC data collected by an ACC data collection module in the ACC component.

It should be noted that, the knuckle driver and the ACC driver are respectively two drivers located on the AP side and the SernsorHub side, and therefore have different requirements for ACC data. Therefore, to implement interaction between the two drivers, and then transmit ACC data to the knuckle driver for use, a knuckle virtual Sensor driver needs to be disposed in the Sensor subsystem driver on the SersouHub side.

The knuckle virtual Sensor driver is configured to process the original ACC data cached in the ACC driver into ACC data that meets a requirement, for example, 128 sets of ACC data.

Still referring to FIG. 4A, for example, the Sensor subsystem framework may include a Sensor client manager.

In addition, it should be further noted that an AP and SensorHub may be two processors of different cores. Therefore, to implement communication between the AP side and the SensorHub side, the HAL on the AP side needs to have a functional module/interface supporting establishment of inter-core communication, and the Sensor subsystem framework on the SensorHub side also needs to have a functional module/interface supporting establishment of inter-core communication.

In addition, it should be further noted that different chip platforms provide different inter-core communication modules/interfaces. For ease of description, in this embodiment, for example, a chip used by the electronic device is a chip of a Qualcomm platform. In this case, functional modules/interfaces supporting establishment of inter-core communication on the AP side and the SensorHub side may be Qualcomm messaging interfaces (Qualcomm Messaging Interface, QMI).

In addition, it should be further noted that, in some possible implementations, an inter-core communication channel between the AP side and the SensorHub side may be initiated by the AP side. Therefore, the HAL on the AP side may further include a smart sensor hardware abstraction module (sensors-hal) configured to invoke an inter-core communication interface on the AP side to initiate inter-core communication.

The software structure of the electronic device 100 that can implement an existing method of invoking, each time a touch operation occurs, the knuckle recognition algorithm to determine whether this touch operation is a knuckle operation is not further described. It may be understood that the layers in the software structure shown in FIG. 4A and the components included in the layers do not constitute specific limitations on the electronic device 100. In some other embodiments of this application, the electronic device 100 may include more or fewer layers than those shown in the figure, and each layer may include more or fewer components. This is not limited in this application.

To better understand the non-knuckle operation filtering solution provided in embodiments of this application, the following first describes, with reference to FIG. 4B, an implementation procedure of invoking, each time a touch operation occurs, the knuckle recognition algorithm to determine whether each touch operation is a knuckle operation.

Before descriptions are provided with reference to FIG. 4B, indications of arrows shown in FIG. 4B are first described. Specifically, in FIG. 4B, a black solid-line unidirectional arrow represents a data channel, and a direction of the arrow represents a data flow direction; a black dashed-line unidirectional arrow represents a command channel, and a direction of the arrow represents a control direction, namely, a command transmission direction; and a black solid-line bidirectional arrow represents a bidirectional channel that can transmit data and a command.

Referring to FIG. 4B, for example, the implementation procedure of invoking the knuckle recognition algorithm to determine whether each touch operation is a knuckle operation may include the following steps.

101. When receiving any form of touch operation performed by the user on the touchscreen, the TP IC generates, in a capacitance sampling manner, capacitance data corresponding to the touch operation, and writes the generated capacitance data into the /dev/thp* node in the TP driver.

The any form of touch operation may be a sliding operation, a tap operation triggered by using a finger, a single-knuckle operation, a double-knuckle operation, or the like.

A process in which the TP IC generates, in the capacitance sampling manner, the capacitance data corresponding to the touch operation may be specifically a process in which an electrical signal generated by the touch operation is converted into a digital signal by using the capacitance sampling module in the TP IC. In other words, the capacitance data in this embodiment of this application is the digital signal converted from the electrical signal generated by the touch operation.

Still referring to FIG. 4B, for example, when the capacitance data generated by the TP IC is written into the /dev/thp* node in the TP driver, the capacitance data cache in the TP driver needs to be used. To be specific, after generating the capacitance data, the TP IC first reports the capacitance data to the capacitance data cache in the TP driver, and then the TP driver writes the capacitance data in the capacitance data cache into the /dev/thp* node.

For ease of description, in this embodiment, the capacitance data generated by the capacitance sampling module is described as original capacitance data, and capacitance data obtained after the THP module performs processing is described as target capacitance data.

For example, in some possible implementations, to ensure that the THP module can extract, from the original capacitance data, target capacitance data and a coordinate node that meet requirements, the original capacitance data generated by the capacitance sampling module in the TP IC may be a digital signal converted from an electrical signal of the entire touchscreen.

For example, in some other possible implementations, to reduce a calculation amount, and then reduce system basic load, the original capacitance data generated by the capacitance sampling module in the TP IC may be a digital signal converted from an electrical signal of a partial screen region corresponding to the touch operation.

It should be understood that the foregoing descriptions are merely examples listed for a better understanding of the technical solutions of this embodiment, and are not considered as a unique limitation on this embodiment.

102. The THP module in aptouch_daemon reads the original capacitance data from the /dev/thp* node in the TP driver.

For example, in a possible implementation, when the original capacitance data is the digital signal converted from the electrical signal of the entire touchscreen, the THP module may read, from the /dev/thp* node, only original capacitance data of the partial screen region corresponding to the touch operation.

It should be understood that the foregoing descriptions are merely examples listed for a better understanding of the technical solutions of this embodiment, and are not considered as a unique limitation on this embodiment.

103.1. The THP module processes the original capacitance to process the original capacitance data into target capacitance data of a $7 \times 7$ matrix, and writes the target capacitance data into the capacitance node in the TP driver.

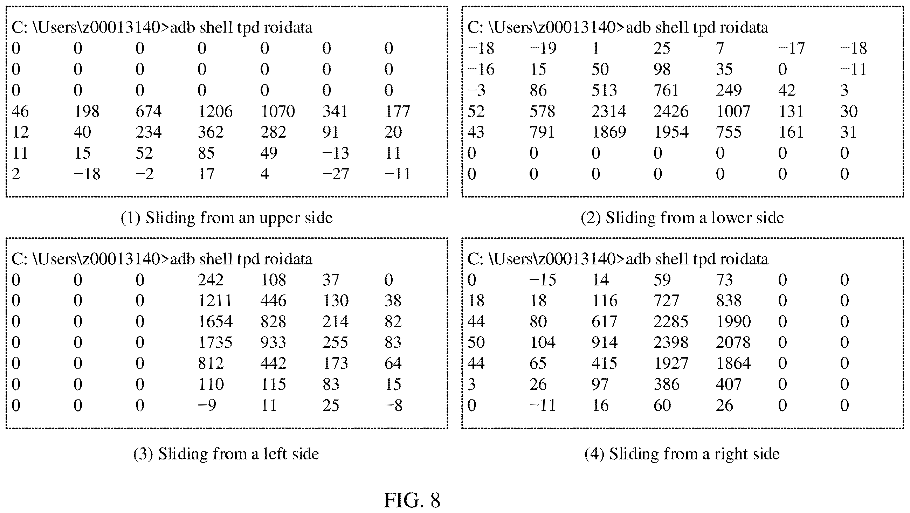

A form of the target capacitance data of the $7 \times 7$ matrix may be shown in FIG. 8(1) to FIG. 8(4).

It should be understood that the foregoing descriptions are merely examples listed for a better understanding of the technical solutions of this embodiment, and are not considered as a unique limitation on this embodiment. During actual application, the target capacitance data may be a matrix of another dimension, for example, $5 \times 5$ or $9 \times 9$, and may be specifically set based on a service requirement. This is not limited in this application. For ease of description, $7 \times 7$ is used as an example in this embodiment of this application.

103.2. The THP module processes the original capacitance data to extract coordinate data from the original capacitance data, and writes the coordinate data into the coordinate node in the TP driver.

The coordinate data extracted from the original capacitance data includes, for example, coordinates of a peak point of the touch operation, namely, a point corresponding to maximum capacitance data when the touch operation is applied to the touchscreen.

104. After the target capacitance data is written into the capacitance node, the TP driver sends the target capacitance data in the capacitance node to the knuckle module in the Input framework, so that the knuckle module obtains, through the ACC data obtaining node in the knuckle driver, ACC data collected by the ACC component.

It should be noted that, in order that the TP driver can actively send the target capacitance data to the knuckle module when the capacitance node has the target capacitance data, after the knuckle module is initialized, the knuckle module may actively register a listening event with the TP driver. In this way, after the target capacitance data is written into the capacitance node, the listening event is listened in time, to implement the operation in step 104.

105. When receiving the target capacitance data reported by the TP driver, the knuckle module writes an ACC data obtaining request into the ACC data obtaining node in the knuckle driver.

106/106'. The knuckle driver initiates QMI inter-core communication by using sensors-hal, and establishes a QMI inter-core communication channel between the AP side and the SensorHub side, to implement communication with the Sensor client manager on the SensorHub side.

107. The Sensor client manager sends the ACC data obtaining request to the knuckle virtual Sensor driver.

108. The knuckle virtual Sensor driver sends, to the ACC driver based on the ACC data obtaining request, a request for obtaining ACC data that meets a requirement.

109. The ACC driver sends original ACC data cached in the ACC data cache to the knuckle virtual Sensor driver, so that the knuckle virtual Sensor driver processes the original ACC data into ACC data that meets a requirement of the knuckle module.

For ease of description, in this embodiment, ACC data collected by the ACC data sampling module in the ACC component is described as original ACC data, and ACC data obtained by the Sensor client manager by invoking the knuckle virtual Sensor driver is described as target ACC data.

It should be noted that, after a knuckle function is enabled, the ACC data sampling module in the ACC component collects original ACC data in real time or in a specified cycle, and caches the collected original ACC data in the ACC data cache in the ACC driver. Then, after an ACC data obtaining request sent by the knuckle virtual Sensor driver is received, the original ACC data is sent to the knuckle virtual Sensor driver.

110. The knuckle virtual Sensor driver processes the original ACC data into the target ACC data that meets the requirement of the knuckle module, and reports the obtained target ACC data to the Sensor client manager.

It should be noted that, to ensure that target ACC data finally obtained by the knuckle module can be used to perform knuckle operation recognition, and a calculation amount can also be reduced, the knuckle virtual Sensor driver may use, as a time node, a moment at which the ACC data obtaining request is received, and obtain, from the original ACC data as the target ACC data, a preset set of ACC data obtained before the time node.

For example, in a possible implementation, the preset group of ACC data may be 128 sets of ACC data.

The preset set may be determined based on a sampling cycle in which the ACC data sampling module in the ACC component collects original ACC data, refresh frequency, or the like. This is not limited in this application.

106'. The Sensor client manager reports the target ACC data to the ACC data obtaining node in the knuckle driver through the QMI inter-core communication channel.

111. After obtaining the target ACC data, the ACC data obtaining node in the knuckle driver reports the target ACC data to the knuckle module.

112. The TP driver writes the coordinate data in the coordinate node into the /dev/input node, and generates an Input event based on the coordinate data.

113. For an Input event generated through each screen touch, the TP driver reports, to EventHub in the Input framework, the Input event and coordinate data carried in the Input event, and waits for further processing.

114. InputReader in the Input framework obtains, from EventHub, the Input event and the coordinate data carried in the Input event.

115. After obtaining the Input event generated on the touchscreen, InputReader in the Input framework sends the coordinate data to the knuckle module.

116. The knuckle module invokes the knuckle recognition algorithm to perform analysis processing on the received coordinate data, target capacitance data, and target ACC data to determine whether this touch operation is a knuckle operation, and reports a determined knuckle recognition result to InputReader.

Still referring to FIG. 4B, for example, during specific implementation, a processing procedure of step 103.1 and step 104 and a processing procedure of step 105, step 106, step 107 to step 110, step 106', and step 111 are performed in synchronization with a processing procedure of step 103.2 and step 112 to step 115. In addition, processing of step 103.1 and step 104 is faster than processing of step 103.2 and step 112 to step 115, so that the knuckle module can obtain the target ACC data before the Input event and the coordinate data carried in the Input event arrive.

117. InputReader forwards, to InputDispatcher, the knuckle recognition result obtained by the knuckle module through processing, so that InputDispatcher dispatches the knuckle recognition result.

118. When the knuckle recognition result indicates that this touch operation is a knuckle operation, InputDispatcher invokes a corresponding App, for example, the Smart screenshots application or the System interfaces application (SystemUI.apk), to perform corresponding processing, and provides feedback for the user.

In addition, it should be further noted that, in some possible implementation scenarios, for example, when an input method hot region (an expanded keyboard region) exists on a current screen interface, the user edits a text by using a keyboard. In this process, the electronic device frequently recognizes touch operations. Currently, to prevent an operation of editing a text by using the keyboard from being interfered with by a knuckle operation, no corresponding screenshot or screen recording response is made to a knuckle operation performed in the input method hot region. However, an underlying layer of the electronic device still invokes, each time a touch operation is perceived, the knuckle recognition algorithm to perform knuckle operation recognition. To be specific, the input method module performs step 119, for example, notifies the THP module to process currently obtained original capacitance data, and sends current status information of an input method, for example, called-out (the keyboard is expanded), called-back (the keyboard is retracted), whether a size of the input method hot region changes, or whether the screen is rotated, to the THP module.

Therefore, based on the structure shown in FIG. 4B, each time a touch operation occurs, the knuckle recognition algorithm is invoked to perform recognition processing on this touch operation to determine whether this touch operation is a knuckle operation, and then when it is determined that this touch operation is a knuckle operation, a response corresponding to the knuckle operation is made in time.

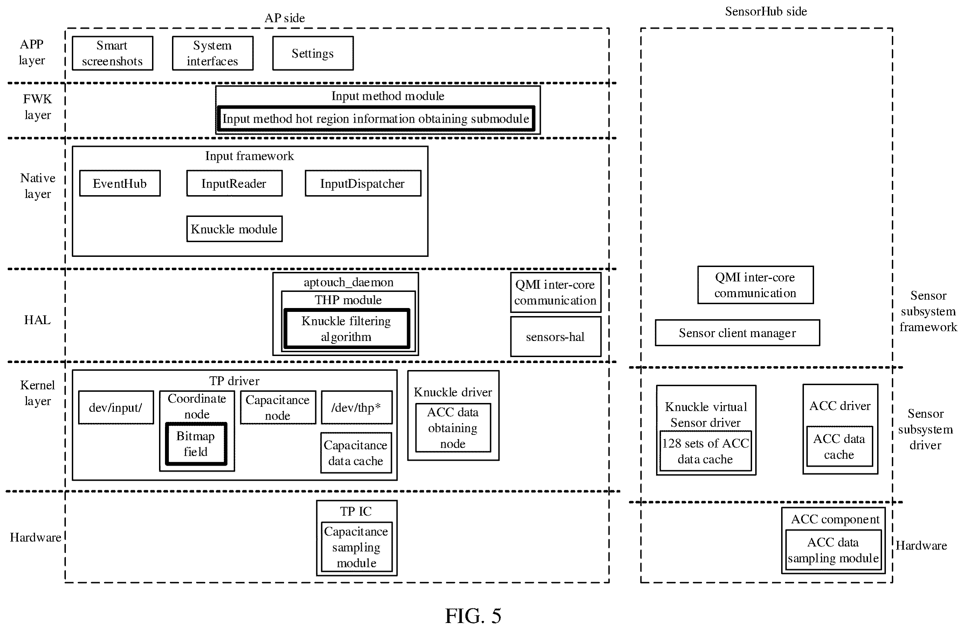

Considering that the user touches the screen at high frequency, but the knuckle function is used at relatively low frequency, invoking the knuckle recognition algorithm for each touch increases system basic load of the electronic device, and also increases a risk of displaying a sliding track due to false recognition. Therefore, to reduce invocation of the knuckle recognition algorithm to reduce system basic load and false recognition cases, an embodiment of this application makes an improvement based on the software structure that is of the electronic device and that is shown in FIG. 4A. A modified software structure of the electronic device is shown in FIG. 5.

Referring to FIG. 5, for example, compared with the software structure that is of the electronic device, that is shown in FIG. 4A, and in which the knuckle recognition algorithm is invoked for each touch operation, in the software structure that is of the electronic device and that is provided in this embodiment of this application to implement the non-knuckle operation filtering solution, mainly, a knuckle filtering algorithm used to filter a non-knuckle operation is integrated into the THP module, a field (referred to as a Bitmap field in this embodiment) used to describe whether to invoke the knuckle recognition algorithm is added to the coordinate node in the TP driver, and an input method hot region information obtaining submodule is added to the input method module.

The knuckle filtering algorithm is used to: each time a touch operation occurs, perform determining on each recognized touch operation to recognize a non-knuckle operation in a specific screen touch operation feature and use scenario, and then add corresponding identification information (not_bypass information in the following) to a Bitmap field by using a recognition result. In this way, when an Input event that carries the Bitmap field is transmitted to InputReader, InputReader can determine, based on the not_bypass information in the Bitmap field, whether to notify the knuckle module to invoke the knuckle recognition algorithm to perform recognition processing on this touch operation.

The Bitmap field is used to indicate whether to filter this touch operation, in other words, whether to invoke the knuckle recognition algorithm.

The input method hot region information obtaining submodule is configured to: obtain a status and height values of the input method hot region; and process the status and the height values into a status and height values that meet requirements, and then transmit the status and the height values to the THP module through a channel corresponding to step 119 shown in FIG. 4B, so that the THP module implements non-knuckle operation filtering based on the knuckle filtering algorithm.

For the non-knuckle operation filtering solution implemented based on the foregoing three items, refer to descriptions of the following embodiments. Details are not described herein.

It should be understood that the foregoing descriptions are merely examples listed for a better understanding of the technical solutions of this embodiment, and are not considered as a unique limitation on this embodiment. During actual application, any one or several of the foregoing items may be selected to be added to the software structure of the electronic device based on a service requirement. This is not limited in this application.

Based on the software structure that is of the electronic device and that is shown in FIG. 5, the following specifically describes a touch operation processing solution that is specifically a non-knuckle filtering solution and that is implemented based on the three newly added items, namely, the knuckle filtering algorithm in the THP module, the Bitmap field in the coordinate node in the TP driver, and the status and the height values that are of the input method hot region and that are obtained by the input method hot region information obtaining submodule in the input method module.

For ease of description, in this embodiment, the non-knuckle operation filtering solution is divided into a filtering phase of aptouch_daemon, a filtering phase of the TP driver, and a filtering phase of the input method hot region. The filtering phase of aptouch_daemon may be divided into filtering a non-knuckle operation in a single screen touch operation and filtering a non-knuckle operation in two consecutive screen touch operations.

Related content of the filtering phase of aptouch_daemon is as follows:

(1) Filtering a non-knuckle operation in a single screen touch operation

Specifically, there are mainly three measurement indicators for determining a knuckle operation: the number of touch points (TouchNum), a pressure value ( *Pressure* ) generated through a screen touch, and whether a capacitance is valid (IsCapValid()).

TouchNum represents the number of touch points on the touchscreen in a scanning cycle.

For example, it may be learned, based on the descriptions of the scenarios corresponding to the knuckle operations shown in FIG. 1A and FIG. B, that knuckle operations may include a single-knuckle operation and a double-knuckle operation. For the single-knuckle operation, corresponding TouchNum is 1, and for the double-knuckle operation, corresponding TouchNum is 2. In other words, only a touch operation whose TouchNum is less than or equal to 2 may be a knuckle operation. Therefore, a touch operation whose TouchNum is greater than 2 may be determined as a non-knuckle operation, and therefore is filtered.

*Pressure* may be obtained through calculation based on a capacitance generated through a screen touch, and a specific calculation formula is the following formula (1):

$$Pressure = a * \sum_{i=0}^{8} \left( k_i * V_i \right) \text{ Formula (1).}$$

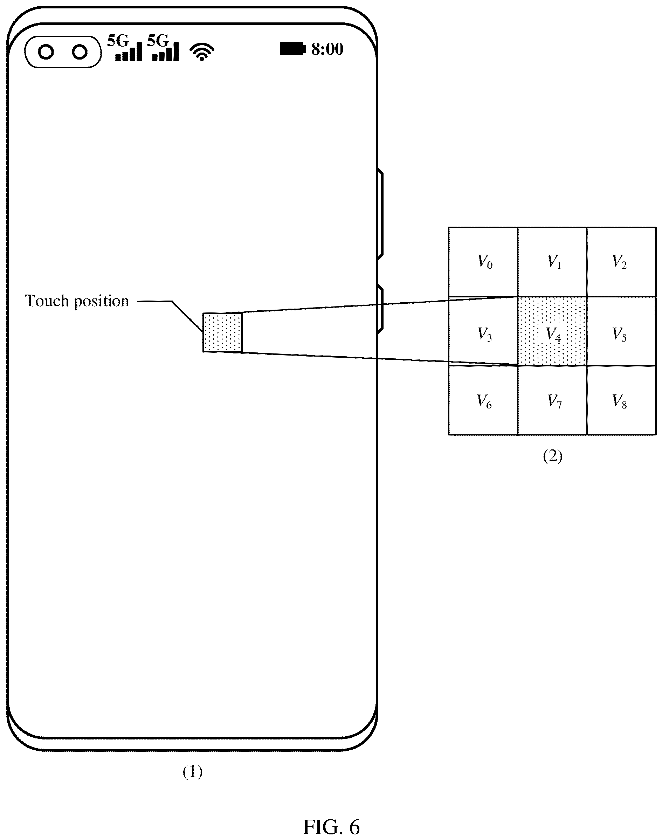

For ease of understanding, the following provides descriptions with reference to FIG. 6. Specifically, when *Pressure* generated through a screen touch is calculated, a touch center point, namely, a point with a maximum capacitance, needs to be first determined. For example, a touch position shown in FIG. 6(1) is the touch center point.

Then, after the center point is determined, capacitances of the center point (for example, $V_4$ shown in FIG. 6(2)) and eight neighboring points (for example, $V_0$, $V_1$, $V_2$, $V_3$, $V_5$, $V_6$, $V_7$, and $V_8$ shown in FIG. 6(2)) of the center point may be obtained, to form capacitance data of a $3 \times 3$ matrix.

Then, the foregoing obtained capacitances of the nine points are denoted as $V_i$, where $i \in [0,8]$.

Then, weighted summation is performed on the capacitances of the nine points based on a weight $k_i$.

Finally, a summation result is multiplied by a coefficient $\alpha$ to obtain *Pressure.*

It should be noted that *Pressure* is calculated by the THP module based on original capacitance data.

For example, in some possible implementations, the THP module may further determine coordinate information of touch points, a major touch point, a minor touch point, a current touch point ID, and the like based on the original capacitance data. The TP driver first writes the foregoing parameters into the coordinate node and then writes the foregoing parameters into the /dev/input node.

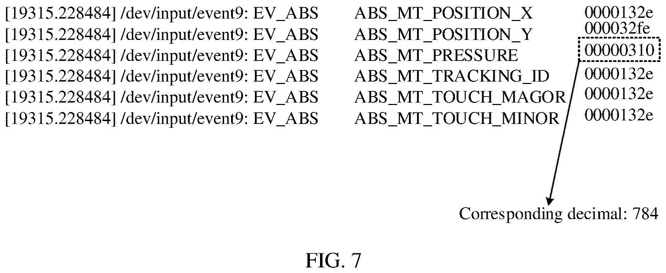

It may be understood that, because different Input events correspond to different X-axis coordinates (ABS_MT_POSITION_X), Y-axis coordinates (ABS_MT_POSITION_Y), pressure values (ABS_MT_PRESSURE), current touch point IDs (ABS_MT_TRACKING_ID), major touch points (ABS_MT_TOUCH_MAGOR), and minor touch points (ABS_MT_TOUCH_MINOR), the foregoing parameters written into the /dev/input node are recorded in a corresponding Input event path. As shown in FIG. 7, when an Input event generated based on current data is event9, the foregoing parameters are recorded in an event9 path, for example, /dev/input/event9, in the /dev/input node.

It should be understood that the foregoing descriptions are merely examples listed for a better understanding of the technical solutions of this embodiment, and are not considered as a unique limitation on this embodiment.

IsCapValid() is mainly used to determine whether there are two rows/two columns of capacitances 0 in upper, lower, left, and right directions of current target capacitance data. Specifically, if there are two rows/two columns of capacitances 0 in the upper, lower, left, and right directions of the current target capacitance data, False is returned, and it indicates that the target capacitance data is invalid. If there are no two rows/two columns of capacitances 0 in the upper, lower, left, and right directions of the current target capacitance data, True is returned, and it indicates that the target capacitance data is valid. When the target capacitance data is invalid, it may be determined that a current touch operation is a non-knuckle operation. When the target capacitance data is valid, it may be further determined, with reference to another determining condition, whether the current touch operation is a non-knuckle operation.

To verify feasibility of the foregoing criterion of determining IsCapValid(), security-enhanced Linux (Security-Enhanced Linux, SEL) is disabled. Then, a sliding operation is performed a plurality of times from four sides of the touchscreen of the electronic device, in other words, sliding is performed from an upper side, sliding is performed from a lower side, sliding is performed from a left side, and sliding is performed from a right side, and an adb Shell command that is specifically adb shell tpd roidata is used to obtain target capacitance data corresponding to these sliding operations. It is found that each of the sliding operations performed from the four sides of the touchscreen of the electronic device, for example, a mobile phone meets a scenario in which at least two rows or two columns are all 0.

For a more intuitive understanding, the following separately displays, with reference to FIG. 8, target capacitance data that is of $7\times7$ matrices and that is generated after sliding is performed from upper, lower, left, and right edges.

Referring to FIG. 8(1), for example, in a scenario in which the touchscreen is slid from the upper side of the touchscreen, three uppermost rows in target capacitance data of a $7\times7$ matrix are all 0.

Referring to FIG. 8(2), for example, in a scenario in which the touchscreen is slid from the lower side of the touchscreen, two lowermost rows in target capacitance data of a $7\times7$ matrix are all 0.

Referring to FIG. 8(3), for example, in a scenario in which the touchscreen is slid from the left side of the touchscreen, three leftmost columns in target capacitance data of a $7\times7$ matrix are all 0.

Referring to FIG. 8(4), for example, in a scenario in which the touchscreen is slid from the right side of the touchscreen, two rightmost columns in target capacitance data of a $7\times7$ matrix are all 0.

In other words, the sliding operations performed from the four sides of the touchscreen of the electronic device all meet a scenario in which at least two rows or two columns are all 0. The target capacitance data corresponding to these scenarios all belongs to invalid capacitances. Therefore, based on the foregoing criterion of determining IsCapValid(), it may be determined that touch operations in which the touchscreen are slid from the upper side, the lower side, the left side, and the right side are all non-knuckle operations.

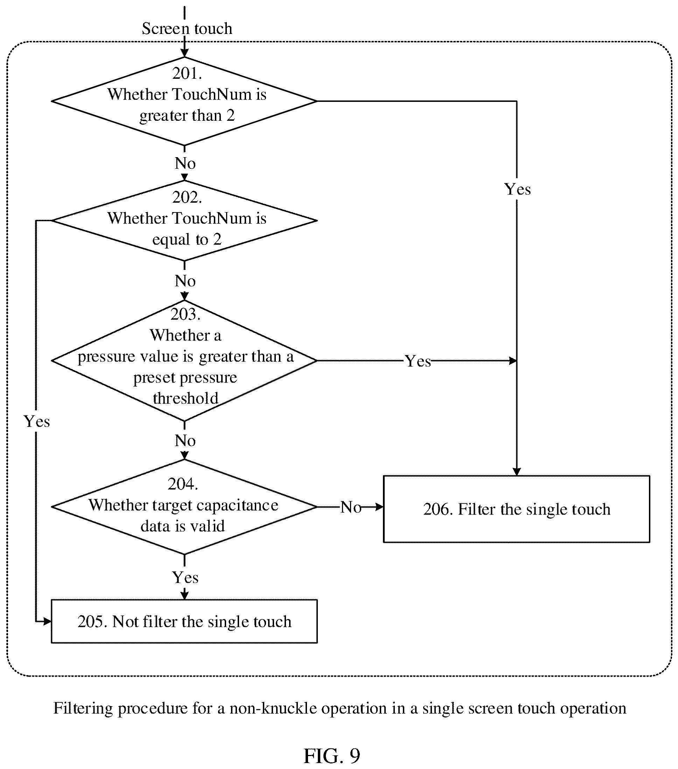

Therefore, in a possible implementation, a filtering procedure that is for a non-knuckle operation in a single screen touch operation and that is shown in FIG. 9 may be implemented based on the three determining factors: TouchNum, *Pressure,* and IsCapValid().

Referring to FIG. 9, for example, a procedure that is of filtering a non-knuckle touch in a single touch and that is implemented in the THP module in aptouch_daemon based on the knuckle filtering algorithm specifically includes the following steps.

201. Whether TouchNum is greater than 2.

For example, in a possible implementation, when receiving a touch of the user on the touchscreen, the THP module may first perform selection based on the knuckle filtering algorithm and TouchNum generated by this touch operation.

It may be learned, based on the foregoing descriptions of the knuckle operation that knuckle operations may have a single-knuckle operation whose TouchNum is 1 and a double-knuckle operation whose TouchNum is 2. Therefore, a non-knuckle operation can be fast filtered by determining whether TouchNum is greater than 2.

Specifically, if it is determined, through determining, that TouchNum is greater than 2, it indicates that there are three or more touch points in a current scanning cycle, and therefore a non-knuckle operation is certainly performed currently. In this case, step 206 may be directly performed, to be specific, this touch operation is filtered. In other words, none of step 103.1, step 103.2, and subsequent steps shown in FIG. 4B are performed. Therefore, the knuckle module is not triggered to invoke the knuckle recognition algorithm to perform knuckle operation recognition processing.

On the contrary, if TouchNum is not greater than 2 (may be equal to 2 or may be equal to 1), the THP module may further perform step 202 based on the knuckle filtering algorithm.

202. Whether TouchNum is equal to 2.

Specifically, if it is determined, through determining, that TouchNum is equal to 2, it indicates that there are two touch points in the current scanning cycle, in other words, an element of a double-knuckle operation is met. To ensure that it can be normally determined, in this scenario, whether this touch operation is a double-knuckle operation (an operation in which double knuckles perform double taps), step 205 may be performed, in other words, this touch operation is not filtered.

On the contrary, if it is determined, through determining, that TouchNum is equal to 1, it indicates that there is one touch point in the current scanning cycle, in other words, an element of a single-knuckle operation is met. To ensure that it can be normally determined, in this scenario, whether this touch operation is a single-knuckle operation (an operation in which a single knuckle performs a double tap, an operation in which a single knuckle performs a single tap and draws a circle, or an operation in which a single knuckle performs a single tap and draws S), the THP module may further perform determining based on the knuckle filtering algorithm and two determining factors: *Pressure* and IsCapValid().

For example, in a possible implementation, it may be first determined whether *Pressure* corresponding to this touch operation meets a preset condition, for example, is greater than a preset pressure threshold, and then it may be determined whether a target capacitance is valid. In other words, step 203 in FIG. 9 is first performed and then step 204 is performed.

For example, in another possible implementation, it may be first determined whether a target capacitance is valid, and then it may be determined whether *Pressure* corresponding to this touch operation meets a preset condition, for example, is greater than a preset pressure threshold. In other words, step 204 in FIG. 9 is first performed and then step 203 is performed.

As an example, this embodiment uses the implementation in which step 203 in FIG. 9 is first performed and then step 204 is performed.

It should be understood that the foregoing descriptions are merely examples listed for a better understanding of the technical solutions of this embodiment, and are not considered as a unique limitation on this embodiment.

203. Whether the pressure value is greater than the preset pressure threshold.

For example, the preset pressure threshold may be determined based on pressure values corresponding to forces that are specified in different electronic devices and that are used to determine that a tap meets the knuckle operation. In this embodiment, 600 is used as an example.

It should be noted that, *Pressure* is positively correlated with a screen contact area. Generally, a finger pulp (especially a thumb) has a larger contact area with the screen than a knuckle, and therefore has larger *Pressure*. Therefore, when *Pressure* is greater than the preset threshold, it may be directly considered that the current touch operation is not a knuckle operation, in other words, is a non-knuckle operation that needs to be filtered.

Based on this determining condition, when *Pressure* is less than or equal to the preset pressure threshold, for example, 600, the THP module may further perform step 204 based on the knuckle filtering algorithm. Otherwise, it is considered that the current touch operation does not meet a force for triggering the knuckle function, and therefore this touch operation can be directly filtered, in other words, step 206 is directly performed.

204. Whether target capacitance data is valid.

A criterion for determining whether the target capacitance is valid may be determined based on the foregoing criterion of determining IsCapValid(). Specifically, when capacitance data is the target capacitance data, namely, capacitance data that is of a 7×7 matrix (hereinafter described as a 7×7 capacitance matrix) and that is obtained after original capacitance data is processed and then zero padding is performed, it may be fast determined, based on four vertices (an upper left vertex, an upper right vertex, a lower left vertex, and a lower right vertex) of the 7×7 capacitance matrix, whether the target capacitance data is valid.

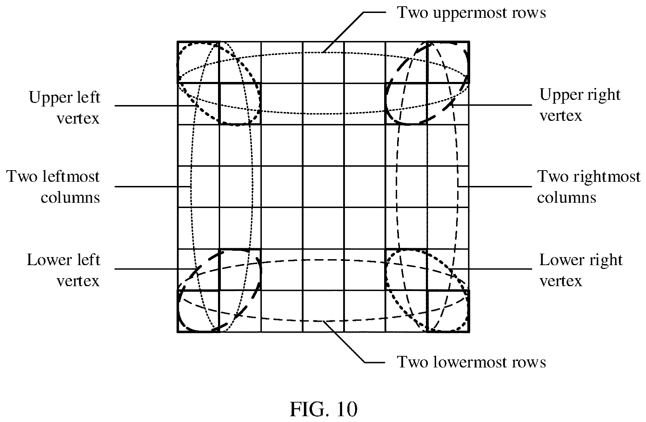

It should be noted that, in this embodiment, vertices used to determine whether the target capacitance data is valid are an outermost corner point and a next vertex of the point along a diagonal. The four vertices of the 7×7 capacitance matrix may be shown in FIG. 10.

Still referring to FIG. 10, for example, in this embodiment, two values in a circle corresponding to each vertex are used as vertex values. The upper left vertex and the lower right vertex are a group of corresponding diagonal vertices, and the upper right vertex and the lower left vertex are a group of corresponding diagonal vertices.

Still referring to FIG. 10, for example, during specific determining, if vertex values of two vertices on a diagonal are all valid capacitances, in other words, four capacitances in both the two vertices on the diagonal have non-0 values, it may be determined that the 7×7 capacitance matrix is valid.

Still referring to FIG. 10, for example, if the upper left vertex has a non-0 value, it may be determined that two uppermost rows and two leftmost columns are valid, in other words, the two rows and the two columns are not all 0, and therefore touch operations in which the touchscreen is slid from the upper side and the touchscreen is slid from the left side can be excluded. If the lower right vertex has a non-0 value, it may be determined that two lowermost rows and two rightmost columns are valid, in other words, the two rows and the two columns are not all 0, and therefore touch operations in which the touchscreen is slid from the lower side and the touchscreen is slid from the right side can be excluded.

Correspondingly, if the upper right vertex has a non-0 value, it may be determined that two uppermost rows and two rightmost columns are valid, in other words, the two rows and the two columns are not all 0, and therefore touch operations in which the touchscreen is slid from the upper side and the touchscreen is slid from the right side can be excluded. If the lower left vertex has a non-0 value, it may be determined that two lowermost rows and two leftmost columns are valid, in other words, the two rows and the two columns are not all 0, and therefore touch operations in which the touchscreen is slid from the lower side and the touchscreen is slid from the left side can be excluded.

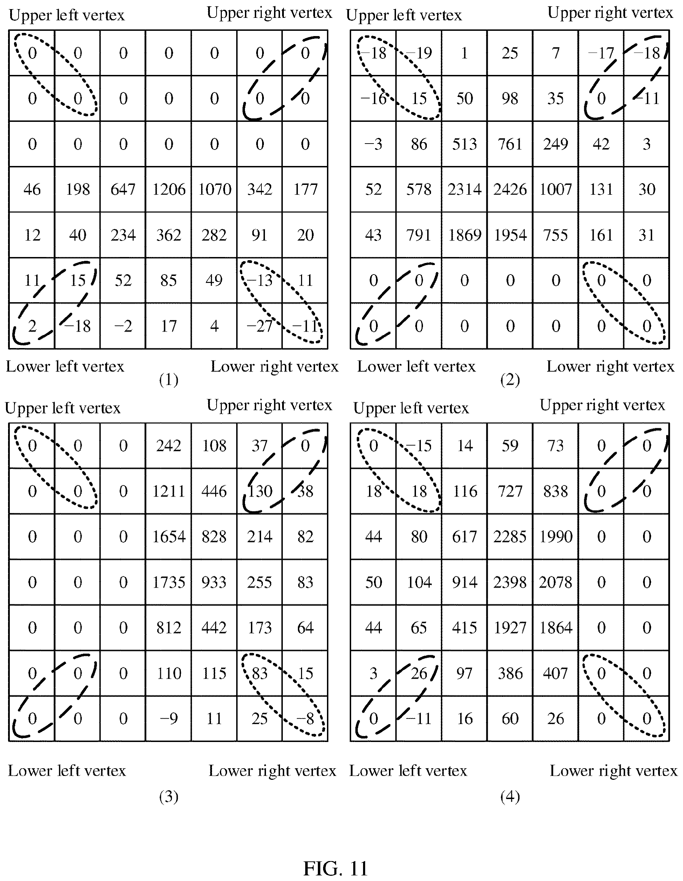

Based on this manner, after the target capacitance data in all the sliding scenarios in FIG. 8(1) to FIG. 8(4) are substituted into the 7×7 capacitance matrix shown in FIG. 10, FIG. 11(1) to FIG. 11(4) may be obtained.

Referring to FIG. 11(1), for example, two capacitances in the upper left vertex are both 0, two capacitances in the upper right vertex are both 0, two capacitances in the lower left vertex are both non-0 values (2, 15), and two capacitances in the lower right vertex are both non-0 values (-11, -13). According to the foregoing manner of determining, based on diagonal vertices, whether target capacitance data is valid, vertex values of a group of diagonal vertices: the upper left vertex and the lower right vertex may be selected to determine that two uppermost-side rows are all 0. Similarly, vertex values of a group of diagonal vertices: the upper right vertex and the lower left vertex may be selected to also determine that the two uppermost-side rows are all 0. For two lowermost-side rows, two leftmost-side columns, and two rightmost-side columns, because none of the vertex values of the lower left vertex and the lower right vertex are 0, the two lowermost-side rows, the two leftmost-side columns, and the two rightmost-side columns are not all 0. Based on the foregoing criterion of determining IsCapValid(), when a 7×7 capacitance matrix includes two rows or two columns of all 0, it may be determined that the 7×7 capacitance matrix is invalid. This also corresponds to a scenario in which a touch operation in which sliding is performed from the upper side of the touchscreen of the electronic device is a non-knuckle operation.

Referring to FIG. 11(2), for example, two capacitances in the upper left vertex are both non-0 values (-18, 15), two capacitances in the upper right vertex have a non-0 value (-18, 0), two capacitances in the lower left vertex are both 0, and two capacitances in the lower right vertex are both 0. According to the foregoing manner of determining, based on diagonal vertices, whether target capacitance data is valid, vertex values of a group of diagonal vertices: the upper left vertex and the lower right vertex may be selected to determine that two lowermost-side rows are all 0. Similarly, vertex values of a group of diagonal vertices: the upper right vertex and the lower left vertex may be selected to also determine that the two lowermost-side rows are all 0. For two uppermost-side rows, two leftmost-side columns, and two rightmost-side columns, because the vertex values of the upper left vertex and the upper right vertex have non-0 values, the two uppermost-side rows, the two leftmost-side columns, and the two rightmost-side columns are not all 0. Based on the foregoing criterion of determining IsCapValid(), when a $7\times7$ capacitance matrix includes two rows or two columns of all 0, it may be determined that the $7\times7$ capacitance matrix is invalid. This also corresponds to a scenario in which a touch operation in which sliding is performed from the lower side of the touchscreen of the electronic device is a non-knuckle operation.

Referring to FIG. 11(3), for example, two capacitances in the upper left vertex are both 0, two capacitances in the upper right vertex have a non-0 value (0, 130), two capacitances in the lower left vertex are both 0, and two capacitances in the lower right vertex are both non-0 values (-8, 83). According to the foregoing manner of determining, based on diagonal vertices, whether target capacitance data is valid, vertex values of a group of diagonal vertices: the upper left vertex and the lower right vertex may be selected to determine that two leftmost-side columns are all 0. Similarly, vertex values of a group of diagonal vertices: the upper right vertex and the lower left vertex may be selected to also determine that the two leftmost-side columns are all 0. For two uppermost-side rows, two lowermost-side rows, and two rightmost-side columns, because the vertex values of the upper right vertex and the lower right vertex have non-0 values, the two uppermost-side rows, the two lowermost-side rows, and the two rightmost-side columns are not all 0. Based on the foregoing criterion of determining IsCapValid(), when a $7\times7$ capacitance matrix includes two rows or two columns of all 0, it may be determined that the $7\times7$ capacitance matrix is invalid. This also corresponds to a scenario in which a touch operation in which sliding is performed from the left side of the touchscreen of the electronic device is a non-knuckle operation.

Referring to FIG. 11(4), for example, two capacitances in the upper left vertex have a non-0 value (0, 18), two capacitances in the upper right vertex are both 0, two capacitances in the lower left vertex have a non-0 value (0, 26), and two capacitances in the lower right vertex are both 0. According to the foregoing manner of determining, based on diagonal vertices, whether target capacitance data is valid, vertex values of a group of diagonal vertices: the upper left vertex and the lower right vertex may be selected to determine that two rightmost-side columns are all 0. Similarly, vertex values of a group of diagonal vertices: the upper right vertex and the lower left vertex may be selected to also determine that the two rightmost-side columns are all 0. For two uppermost-side rows, two lowermost-side rows, and two leftmost-side columns, because the vertex values of the upper left vertex and the right lower left vertex have non-0 values, the two uppermost-side rows, the two lowermost-side rows, and the two leftmost-side columns are not all 0. Based on the foregoing criterion of determining IsCapValid(), when a $7\times7$ capacitance matrix includes two rows or two columns of all 0, it may be determined that the $7\times7$ capacitance matrix is invalid. This also corresponds to a scenario in which a touch operation in which sliding is performed from the right side of the touchscreen of the electronic device is a non-knuckle operation.

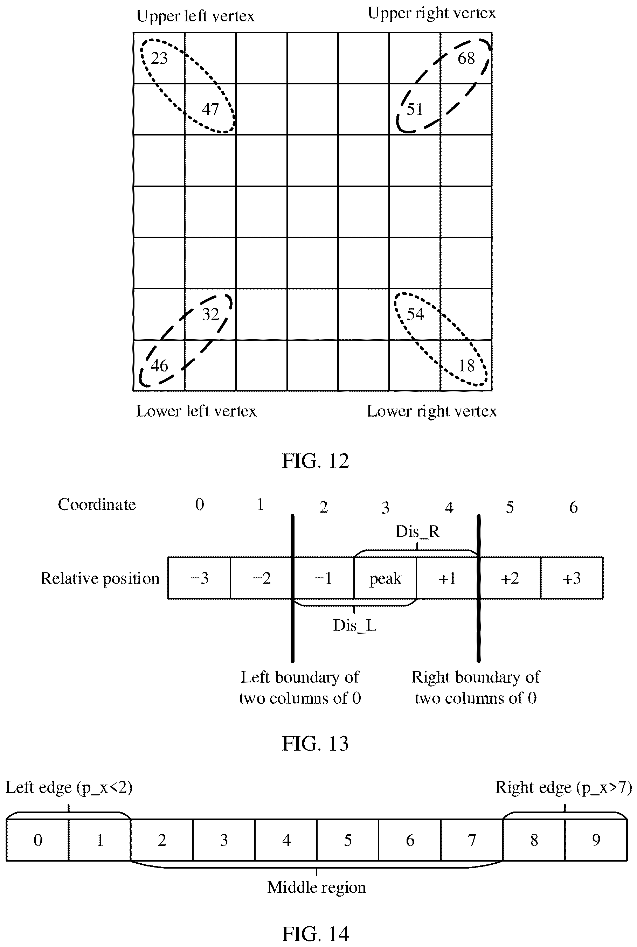

It can be determined, based on the foregoing descriptions, that it can be fast determined, based on vertex values of a group of vertices on a diagonal, whether target capacitance data is valid. Based on this, no attention is paid to a capacitance at another position. For a $7\times7$ capacitance matrix shown in FIG. 12, when two capacitances of an upper left vertex are 23 and 47, two capacitances of an upper right vertex are 68 and 51, two capacitances of a lower left vertex are 46 and 32, and two capacitances of a lower right vertex are 18 and 54, it may be determined that the $7\times7$ capacitance matrix shown in FIG. 12 is a valid $7\times7$ capacitance matrix, in other words, target capacitance data corresponding to the matrix is valid.

It should be understood that the foregoing descriptions are determining of validity of target capacitance data. However, in an actual application scenario, validity of a capacitance may alternatively be determined based on original capacitance data. In this way, processing of extracting target capacitance data from the original capacitance data does not need to be first performed, thereby reducing time and resources required for processing.

For example, when capacitance data is original unprocessed original capacitance data, for each touch operation, the THP module needs to obtain an $N\times N$ capacitance matrix, in other words, obtain target capacitance data, by using a capacitance peak point (peak point/maximum point) as a center. However, if a touch point is located on an edge of the screen, the THP module can actually obtain only one $N\times M$, $M\times N$, or $M\times M$ capacitance matrix ($M<N$). For such a scenario, the following two solutions may be used when it is determined whether a capacitance is valid.

Solution 1: Perform determining based on coordinate values ($p\_x$, $p\_y$) of a peak point

For example, N=7. FIG. 13 shows relative positions of a peak point and other capacitance points in an X-axis direction of a $7\times7$ capacitance matrix that the THP module expects to obtain, and two black vertical lines each represent a boundary of a $7\times5$ capacitance matrix actually obtained when two columns of 0 exist on a left/right edge. In this case, a distance of the peak point relative to a boundary of two columns of 0 is Dis=(N+1)/2-2 (including the peak point, where N is an odd number). If a distance of the peak point relative to the edge of the screen is less than or equal to Dis, at least two columns of 0 need to be padded. However, according to the foregoing criterion of determining IsCapValid(), when a 7×7 capacitance matrix includes two rows or two columns of all 0, it may be determined that the 7×7 capacitance matrix is invalid. In other words, target capacitance data obtained by performing processing based on current original capacitance data is essentially invalid. Therefore, the THP module does not need to process the original capacitance data to obtain the target capacitance data.

Based on this, in a scenario of original capacitance data, when validity of a capacitance is determined, it may be determined whether p_x and Dis or whether p_y and Dis meet the following condition: p_x<Dis, p_x>curResolution.x-Dis-1, p_y<Dis, or p_y>curResolution.y-Dis-1.

curResolution.x is an X-axis maximum pixel, and curResolution.y is a Y-axis maximum pixel.

Specifically, if the foregoing condition is met, it is determined that the capacitance is invalid; otherwise, it is determined that the capacitance is valid.

For ease of understanding, the following provides specific descriptions with reference to FIG. 14 by using an X-axis p_x value as an example. For example, required target capacitance data is still 7×7. In this case, when N=7, it may be learned, according to the foregoing formula for determining Dis, that Dis=(7+1)/2-2=2.

Referring to FIG. 14, for example, the X-axis maximum pixel curResolution.x=10 (FIG. 14 shows 10 pixels 0 to 9). In this case, when p_x<2 or p_x> 10-2-1=7, the peak point falls on a left edge or a right edge of the screen; otherwise, the peak point falls within a middle region in an X-axis direction of the screen. Determining logic of a Y-axis is similar, and details are not described herein.

For example, when neither of an X-axis coordinate and a Y-axis coordinate of the peak point fall on the edge of the screen, it is determined that the capacitance is valid. Otherwise, it is determined that the capacitance is invalid.

It should be understood that the foregoing descriptions are merely examples listed for a better understanding of the technical solutions of this embodiment, and are not considered as a unique limitation on this embodiment.

Solution 2: Perform determining based on the number of pixels of an actually obtained capacitance matrix

It may be understood that the actually obtained capacitance matrix in this embodiment is a capacitance matrix not padded with 0 and corresponding to capacitance data that is extracted from original capacitance data.

Specifically, in this solution of determining validity of a capacitance, when the number of pixels of the actual capacitance matrix≤N*(N-2), it may be determined that the capacitance is invalid (False may be returned from a perspective of code logic). On the contrary, it may be determined that the capacitance is valid (True may be returned from a perspective of code logic).

For example, N=9. In this case, the THP module expects to obtain a 9×9 capacitance matrix. When a touch point is located on the edge of the screen, it may be learned, based on the foregoing descriptions, that at least two rows or two columns of capacitances in the actually obtained capacitance matrix are missing. In this case, the number of pixels of the actually obtained capacitance matrix=9*7=63≤9*(9-2)=63, and therefore the capacitance is invalid. When a touch point is not located on the edge of the screen, a maximum of one row or one column of capacitances in the actually obtained capacitance matrix are missing. In this case, the number of pixels of the actually obtained capacitance matrix=8*8=64>9*(9-2)=63, and therefore the capacitance is valid.

It should be understood that the foregoing descriptions are merely examples listed for a better understanding of the technical solutions of this embodiment, and are not considered as a unique limitation on this embodiment. During actual application, IsCapValid() only needs to improve running efficiency as much as possible, thereby reducing running frequency of unnecessary code. This is not limited in this application.

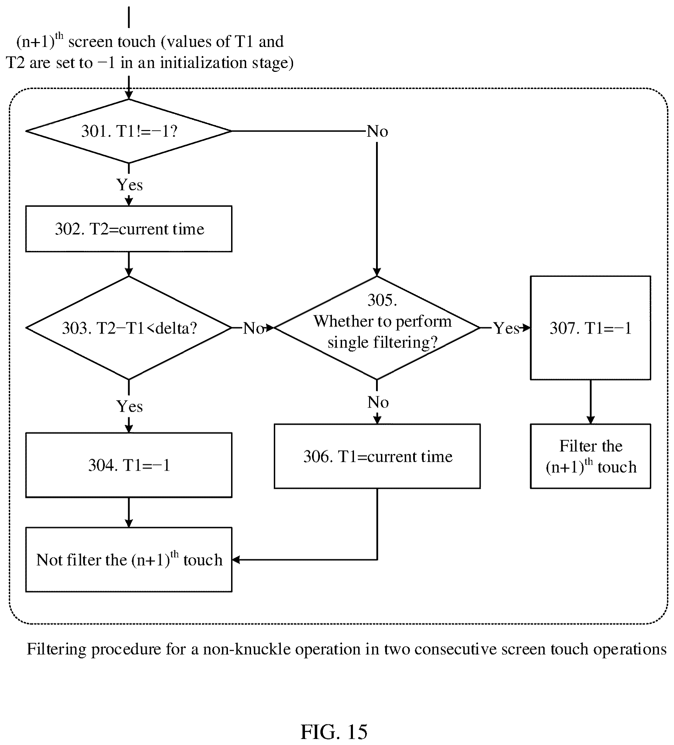

In addition, it should be further noted that, during actual application, non-knuckle operation filtering may be separately performed based on IsCapValid(), or may be incorporated into the filtering solution in FIG. 9 or FIG. 15. This not limited in this application.

Therefore, validity of the capacitance data is fast determined.

When it is determined, through determining, that the target capacitance data is valid, step 205 may be performed. On the contrary, step 206 is performed.

205. Not filter the single touch.

206. Filter the single touch.

Therefore, based on the knuckle filtering algorithm, according to the determining processing logic shown in FIG. 9. After the THP module in aptouch_daemon obtains the original capacitance data, the THP module may determine, based on the three determining factors: TouchNum, *Pressure,* and IsCapValid(), a touch operation that obviously does not meet the knuckle operation. For the touch operation (non-knuckle operation) that does not meet the knuckle operation, a recognition result (not_bypass information) is transmitted to the TP driver, and then added to an added Bitmap field, so that an Input event generated by the dev/input node in the TP driver can carry the field. In this way, InputReader in the Input framework can obtain, by parsing the Input event, the not_bypass information carried in the Bitmap field, and then determine, based on the not_bypass information, whether to notify the knuckle module to invoke the knuckle recognition algorithm to perform recognition processing on this touch operation. Therefore, a touch operation, namely, a non-knuckle operation, that is obviously not a knuckle operation in a single screen touch operation can be filtered, thereby greatly reducing pressure on system basic load.

In addition, because the number of times of triggering the knuckle module to invoke the knuckle recognition algorithm is greatly reduced, a risk of displaying a sliding running track on a screen interface due to false recognition is also reduced.

(2) Filtering a non-knuckle operation in two consecutive screen touch operations

Based on an actual use scenario of the user, it is considered that when a knuckle performs a double tap to perform a screenshot or screen recording, there may be specific operation inconvenience or successful recognition may be difficult due to a misoperation of the user. For example, when the user performs the second knuckle tap, an entire finger or an upper half of the finger may directly touch the touchscreen due to inertia. Therefore, in this case, to improve a success rate of recognizing an operation in which a knuckle performs a double tap, in this embodiment, a filtering threshold of a next touch operation of a single knuckle operation (the touch operation corresponding to step 205 in FIG. 9) is reduced, so that it can be ensured that a knuckle operation can be filtered, to ensure operation experience of the user.

Specifically, in a filtering procedure for a non-knuckle operation in two consecutive screen touch operations, for the first touch operation, it may be determined, based on the filtering solution that is for a non-knuckle operation in a single touch operation and that is shown in the embodiment shown in FIG. 9, whether the first touch operation needs to be filtered. In other words, it is determined whether the first touch operation meets the knuckle operation.

When it is determined that the first touch operation is a knuckle operation (a single tap performed by a single knuckle or double knuckles), in a possible implementation, for a next touch operation, attention is paid only to a time interval between the two touch operations. When the time interval is less than a preset time interval threshold, it may be determined that the second touch operation is also a knuckle operation, in other words, does not need to be filtered.

Based on this, in a filtering solution for a non-knuckle operation in two consecutive screen touch operations, provided that two consecutive ($n^{th}$ and $(n+1)^{th}$) touch operations simultaneously meet the following two conditions, the $(n+1)^{th}$ touch operation may not be filtered. Otherwise, the $(n+1)^{th}$ touch operation is filtered.

Condition 1: The $n^{th}$ touch operation is not filtered.

Condition 2: A time interval between the $(n+1)^{th}$ touch operation and the $n^{th}$ touch operation is less than a preset time interval threshold, for example, 500 ms.

Specifically, if the $n^{th}$ touch operation is not filtered, a corresponding timestamp T1 is recorded. If a timestamp corresponding to the $(n+1)^{th}$ touch operation is T2, when a time threshold between T2 and T1 is less than the preset time threshold (delta), the $(n+1)^{th}$ touch operation is directly delivered and the timestamp is updated. If the time interval is outside a delta neighborhood, the timestamp is reset (for example, set to an invalid value -1), and filtering is performed based on TouchNum, *Pressure,* and IsCapValid() in the foregoing embodiment, in other words, according to the principles of step 201 to step 206 in the embodiment shown in FIG. 9.

Based on the foregoing filtering rule, the filtering procedure for a non-knuckle operation in two consecutive screen touch operations may be shown in FIG. 15, and specifically includes the following steps.

301. When receiving an $(n+1)^{th}$ touch operation on the touchscreen, determine whether a timestamp T1 corresponding to an $n^{th}$ touch operation is a preset invalid value.

For example, in a possible implementation, the preset invalid value is, for example, the foregoing -1. The invalid value may be set by default at an initialization stage. Therefore, in step 301, the determining whether a timestamp T1 corresponding to an $n^{th}$ touch operation is a preset invalid value may be represented as "T1!=-1?".

Still referring to FIG. 15, for example, when T1!=-1, it indicates that the $n^{th}$ touch operation is a touch operation that is not filtered, in other words, the single touch operation meets the condition of the knuckle operation. In this case, it may be further determined, based on the filtering rule of a time interval, whether the $(n+1)^{th}$ touch operation is a non-knuckle operation that needs to be filtered, in other words, step 203 is performed.

On the contrary, when T1=-1, step 305 is performed. To be specific, based on the manner in step 201 to step 206 in the embodiment shown in FIG. 9, filtering a non-knuckle operation in a single touch operation is performed on the $(n+1)^{th}$ touch operation, to determine whether the $(n+1)^{th}$ touch operation needs to be filtered.

302. Obtain current system time, and assign the current system time to T2.

303. Determine a time interval between T2 and T1 based on T2 and T1, and then determine whether the time interval is less than a preset time threshold.

Still referring to FIG. 15, for example, if the time interval of T2-T1 is less than the preset time threshold, for example, 500 ms, it is determined that the $(n+1)^{th}$ touch operation meets the condition of the knuckle operation. In this case, step 304 may be performed.

Still referring to FIG. 15, for example, if the time interval of T2-T1 is not less than the preset time threshold, for example, 500 ms, it may be determined that the $(n+1)^{th}$ touch operation does not meet the condition of the knuckle operation. In this case, step 305 may be performed. To be specific, based on the manner in step 201 to step 206 in the embodiment shown in FIG. 9, filtering a non-knuckle operation in a single touch operation is performed on the $(n+1)^{th}$ touch operation, to determine whether the $(n+1)^{th}$ touch operation needs to be filtered.

304. Set the timestamp corresponding to T1 to the invalid value.

**It** should be noted that in this embodiment, -1 is used to indicate the invalid value. Therefore, the timestamp corresponding to T1 is set to the invalid value, in other words, T1=-1. In this way, subsequently, determining is not performed on another touch operation based on T1.

Still referring to FIG. 15, for example, after T1 is set to the preset invalid value, related information of the $(n+1)^{th}$ touch operation may be sent to another functional module for processing, so that the knuckle module invokes the knuckle recognition algorithm to determine whether this touch operation is a knuckle operation. In other words, the $(n+1)^{th}$ touch operation is not filtered.

305. Determine, based on three determining elements: TouchNum, *Pressure,* and IsCapValid(), whether the $(n+1)^{th}$ touch operation needs to be filtered.

For details, refer to the implementation details of step 201 to step 206 in the embodiment shown in FIG. 9. Details are not described herein.

Still referring to FIG. 15, for example, when the $(n+1)^{th}$ touch operation does not need to be filtered, it is determined that this touch operation may be used as the first operation of a new knuckle operation. A timestamp of the first operation is still represented by T1, and T1 is set to current system time. In other words, step 306 is performed. On the contrary, it indicates that this touch operation needs to be filtered. In this case, T1 needs to be set to the invalid value (-1). In other words, step 307 is performed.

It should be understood that the foregoing descriptions are merely examples listed for a better understanding of the technical solutions of this embodiment, and are not considered as a unique limitation on this embodiment.

It may be learned, based on the descriptions of the embodiment shown in FIG. 15, that in the filtering procedure that is for a non-knuckle operation in two consecutive screen touch operations and that is implemented by the THP module in aptouch_daemon based on the knuckle filtering algorithm, only the following principle need to be followed:

For any one $((n+1)^{th})$ touch operation, it is first determined whether a previous $(n^{th})$ touch operation is filtered. A determining basis is whether T1!=-1.

If T1=-1, it is further determined whether to filter the single touch.

It should be noted that, to simplify code logic during specific implementation, code of the foregoing three determining elements: TouchNum, *Pressure,* and IsCapValid() may be separately encapsulated into separate functional modules, or the code of the three determining elements may be encapsulated into one functional module. In this way, the code is directly invoked in this embodiment.

If the foregoing single filtering condition is met, T1=-1 is set, and it is determined that this touch operation is a non-knuckle operation, and this touch operation is filtered.

If the foregoing single filtering condition is not met, T1=current time is set, and this touch operation is not filtered.

If T1!=-1, T2=current time is set, and it is further determined whether T2-T1<delta.

If no, it is further determined whether to filter the single touch, in other words, the foregoing encapsulated functional modules of the three determining elements: TouchNum, *Pressure,* and IsCapValid() are invoked.

If yes, T1=-1 is set, and this touch operation is not filtered.

It should be noted that, in embodiments of this application, the recorded "filtering" or "not filtering" the non-knuckle operation is specifically a recognition result obtained through recognition by using the knuckle filtering algorithm in the THP module. Based on the recognition result, a corresponding value may be added to a Bitmap field. For example, in the following embodiment, it is agreed that "1" should indicate that this touch operation is not filtered, in other words, a corresponding recognition result is "not filtering". It is agreed that "0" should indicate that this touch operation is filtered, in other words, a corresponding recognition result is "filtering".

For example, when a recognition result is "filtering" or a value in a specified bit in a Bitmap field is "0", InputReader does not notify the knuckle module to invoke the knuckle recognition algorithm to perform recognition processing on this touch operation. On the contrary, when a recognition result is "not filtering" or a value in a specified bit in a Bitmap field is "1", InputReader notifies the knuckle module to invoke the knuckle recognition algorithm to perform recognition processing on this touch operation.

Therefore, based on the knuckle filtering algorithm, according to the determining processing logic shown in FIG. 15, the THP module in aptouch_daemon can recognize a non-knuckle operation in two consecutive touch operations, and can also recognize a non-knuckle operation in a single screen touch operation. Therefore, a majority of touch operations, namely, non-knuckle operations, that do not meet the knuckle operation can be recognized at a source. In this way, a corresponding recognition result is added to a Bitmap field, so that InputReader can reduce invocation of the knuckle module, thereby reducing invocation of the knuckle recognition algorithm, and greatly reducing pressure on system basic load.

In addition, because the number of times of triggering the knuckle module to invoke the knuckle recognition algorithm is greatly reduced, a risk of displaying a sliding running track on a screen interface due to false recognition is also reduced.

Related content of the filtering phase of the TP driver is as follows:
Specifically, in this embodiment, a filtering solution implemented by the TP driver is specifically allocating a new field in an Input event, and it is agreed that the newly allocated field should be used to describe whether to invoke the knuckle recognition algorithm, to filter a non-knuckle operation.

According to the information that is recorded in the path corresponding to the Input event and that is shown in FIG. 7, an ABS_MT identifier is also used in the newly allocated field in this embodiment, provided that a name of the field is distinguished from that of another field. As an implementation, for example, the field may be named ABS_MT_NOT_BYPASS.

**It** should be understood that the foregoing descriptions are merely examples listed for a better understanding of the technical solutions of this embodiment, and are not considered as a unique limitation on this embodiment.

**In** addition, it should be noted that, the newly added field may be a field in a Bitmap (bitmap) format. For ease of description, the newly added field is subsequently described as a Bitmap field.

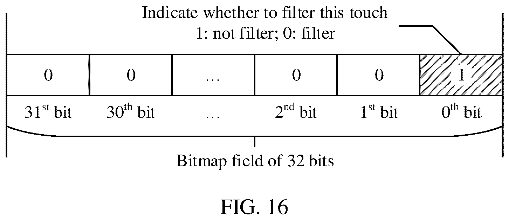

Referring to FIG. 16, for example, a length of the Bitmap field is 32 bits. In a possible implementation, it may be agreed that content in the $0^{th}$ bit should be used to describe whether to invoke the knuckle recognition algorithm, in other words, whether to bypass the knuckle recognition algorithm. Remaining bytes are used to support subsequent extensibility.

For example, in a possible implementation, it may be agreed that when the content in the $0^{th}$ bit is 1, it should indicate that this touch operation is not filtered, in other words, the knuckle recognition algorithm needs to be invoked. It is agreed that when the content in the $0^{th}$ bit is 0, it should indicate that this touch operation is filtered, in other words, the knuckle recognition algorithm needs to be skipped, in other words, the knuckle recognition algorithm is not invoked.

For example, in another possible implementation, alternatively, it may be agreed that when the content in the $0^{th}$ bit is 0, it should indicate that this touch operation is not filtered, in other words, the knuckle recognition algorithm needs to be invoked. It is agreed that when the content in the $0^{th}$ bit is 1, it should indicate that this touch operation is filtered, in other words, the knuckle recognition algorithm needs to be skipped, in other words, the knuckle recognition algorithm is not invoked.

**It** should be understood that the foregoing descriptions are merely examples listed for a better understanding of the technical solutions of this embodiment, and are not considered as a unique limitation on this embodiment. For ease of description, in this embodiment, 1 indicates that this touch operation is not filtered, and 0 indicates that this touch operation is filtered.

Filling of the content in the $0^{th}$ bit in the Bitmap field and an invocation procedure of the Bitmap field may be shown in FIG. 17, and specifically include the following steps.

401. Each time aptouch_daemon senses a touch performed by the user on the screen, the THP module invokes the knuckle filtering algorithm to determine whether the current touch is a touch operation that needs to be filtered (a determining result is recorded as not_bypass information).

For specific implementation details in which the THP module invokes the knuckle algorithm to determine whether the current touch is a touch operation that needs to be filtered, refer to the embodiment shown in FIG. 9 or FIG. 15. Details are not described herein.

Specifically, in this embodiment, it is agreed that when the content in the $0^{th}$ bit in the Bitmap field is 1, it should indicate that this touch operation is not filtered, in other words, the knuckle recognition algorithm is invoked. It is agreed that when the content in the $0^{th}$ bit in the Bitmap field is 0, it should indicate that this touch operation is filtered, in other words, the knuckle recognition algorithm is not invoked. Therefore, the determined not_bypass information is either 1 or 0.

402. aptouch_daemon delivers the determined not_bypass information to the coordinate node in the TP driver through the THP module.

Specifically, the THP module may deliver the not_bypass information to the coordinate node in the TP driver through a data channel shown in step 132.1 in FIG. 4B.

403. The TP driver fills the not_bypass information in the $0^{th}$ bit of the Bitmap field, and writes the Bitmap field into the coordinate node.

404. The TP driver writes related data (including data of the Bitmap field) in the coordinate node into the dev/input/ node.

Specifically, the TP driver may write the related data in the coordinate node into the dev/input/ node through a data channel shown in step 112 in FIG. 4B.

405. The TP driver generates an Input event based on the related data cached in the dev/input/ node.

Information included in the Input event may be shown in FIG. 7. Specifically, in this embodiment, the Bitmap field is added based on the field shown in FIG. 7.

Still referring to FIG. 17, for example, after generating the Input event, the TP driver sends the Input event to EventHub in the Input framework. For example, the Input event may be transmitted through a data channel shown in step 113 in FIG. 4B.

406. InputReader reads the not_bypass information in the $0^{th}$ bit in the Bitmap field.

407. InputReader determines whether the not_bypass information is 1.

408. InputReader notifies the knuckle module to invoke the knuckle recognition algorithm.

In other words, step 115 shown in FIG. 4B is performed.

409. InputReader does not notify the knuckle module to invoke the knuckle recognition algorithm.

In other words, InputReader does not interact with the knuckle module. In this way, the knuckle module does not receive coordinate information from InputReader, and therefore does not invoke the knuckle recognition algorithm to perform knuckle operation recognition processing.

Therefore, the TP driver fills, based on the whether not_bypass information delivered by the THP module in aptouch_daemon, the Bitmap field corresponding to the Input event. Before invoking the knuckle module to invoke the knuckle recognition algorithm, the Input framework decides, based on the not_bypass information in the $0^{th}$ bit in the Bitmap field, whether to invoke the knuckle recognition algorithm, thereby reducing the number of times of invoking the knuckle recognition algorithm.

Related content of the filtering phase of the input method hot region is as follows:

It should be noted that, in a current system, a knuckle touch that falls within the input method hot region (keyboard region) does not trigger a related action such as a screenshot or screen recording. A reason is that when recognizing that coordinates of a touch operation are located in the input method hot region, the Input framework shields invocation of Apps such as knuckle screenshot or screen recording. However, in a background program, the knuckle module is still invoked when a touch occurs in the input method hot region, and obtains ACC data through inter-core communication. This process generates unnecessary redundant actions and therefore increases system load.

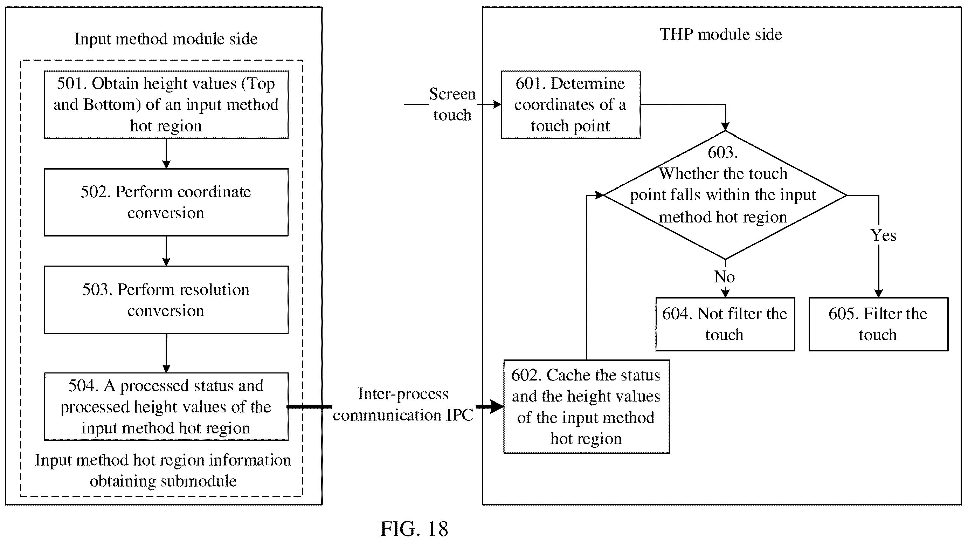

To resolve this problem, in this embodiment, in the THP module in aptouch_daemon, the knuckle filtering algorithm is used to filter a touch operation that falls within the input method hot region. In other words, a filtering solution of the input method hot region needs to relate to the input method module and the THP module. A filtering procedure that is for a touch operation in the input method hot region and that is implemented by the two modules may be shown in FIG. 18, and specifically includes step 501 to step 504 implemented by the input method hot region information obtaining submodule in the input method module and step 601 to step 604 implemented in the THP module.

501. Obtain height values (Top and Bottom) of the input method hot region.

Specifically, when an input method status is switched (called-out, called-back, changed-in-size, screen-rotated, or the like), height values of a current input method hot region need to be obtained.

For ease of description, in this embodiment, the input method status is a called-out state, to be specific, the input method hot region is expanded on a current screen, as shown in FIG. 19(1).

For the height values that are of the input method hot region and that need to be obtained, in this embodiment, height values of upper and lower sides are obtained as an example. For example, when the mobile phone is in a portrait state, obtained Top and Bottom are Y-axis coordinates. When the touchscreen of the mobile phone is in the state shown in FIG. 19(1), obtained Top may be denoted as TopY in FIG. 19(2), and obtained Bottom may be denoted as BottomY in FIG. 19(2).

502. Perform coordinate conversion.

It should be understood that the electronic device, for example, a mobile phone, usually has a landscape state and a portrait state in a use process. In a possible implementation, it may be agreed that all obtained height values of the input method hot region should be based on the portrait state. Therefore, when the electronic device is currently in the landscape state, obtained coordinates need to be converted, to be specific, coordinate values corresponding to landscape are converted into coordinate values corresponding to portrait.

In the landscape state, a screen interface is rotated by 90° or 270° (distinguished based on a position of a power button on a side frame of the electronic device). This causes rotation in a direction of the input method hot region, and therefore logical coordinates and physical coordinates of the input method hot region are rotated by specific degrees. On a THP module side, a screen rotation status cannot be obtained. Therefore, on an input method module side, specifically, on an input method hot region information obtaining submodule side, coordinate conversion needs to be performed when the screen rotates.

For ease of description, in this embodiment, a mobile phone is used as an example, and a position of a power button of the mobile phone may be shown in FIG. 3(1).

For example, for the mobile phone shown in FIG. (1), at 90° landscape, a screen interface displaying the input method hot region may be shown in FIG. 20(1), and at 270° landscape, a screen interface displaying the input method hot region may be shown in FIG. 20(2).

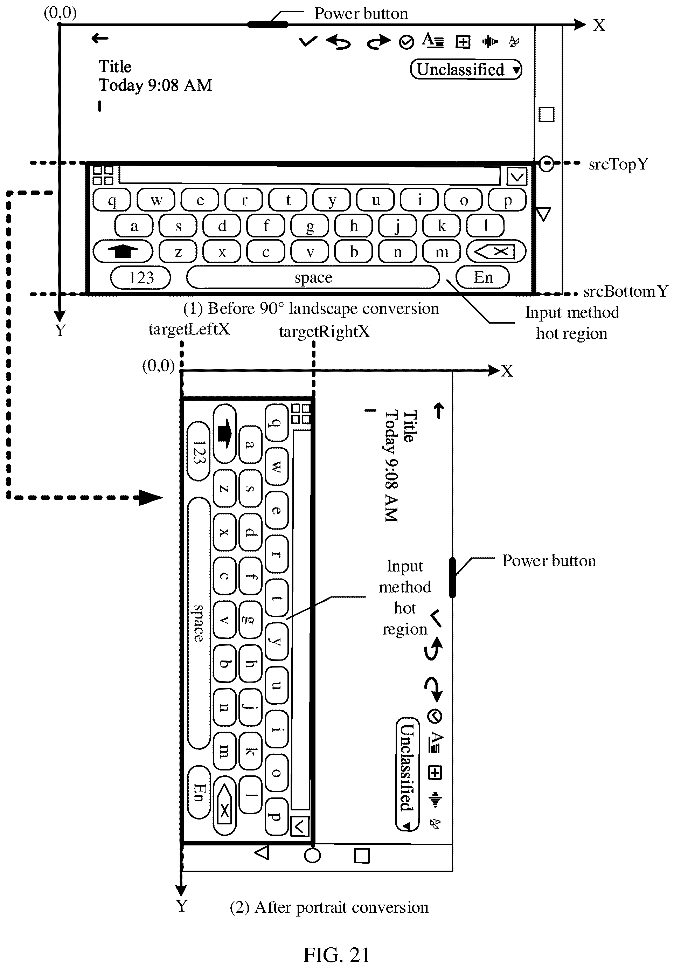

For a case of 90° landscape, referring to FIG. 21(1), Top existing before coordinate conversion may be represented as srcTopY, and Bottom existing before coordinate conversion may be represented as srcBottomY.

90° landscape needs to be rotated rightward by 90° to be recovered to portrait. After a coordinate system of 90° landscape is converted into a coordinate system of portrait, in other words, after FIG. 21(1) is converted into FIG. 21(2), Top obtained after portrait conversion may be represented as targetRightX, and Bottom obtained after portrait conversion may be represented as targetLeftX.

**It** may be learned, based on FIG. 21(1) and FIG. 21(2), that coordinate conversion of 90° landscape may be determined according to the following formula (2) and formula (3):

$$\text{targetLeftX}=\text{currentResolution.Y}-\text{srcBottomY} \quad \text{Formula (2);}$$

and

$$\text{targetRightX}=\text{currentResolution.Y}-\text{srcTopY} \quad \text{Formula (3).}$$

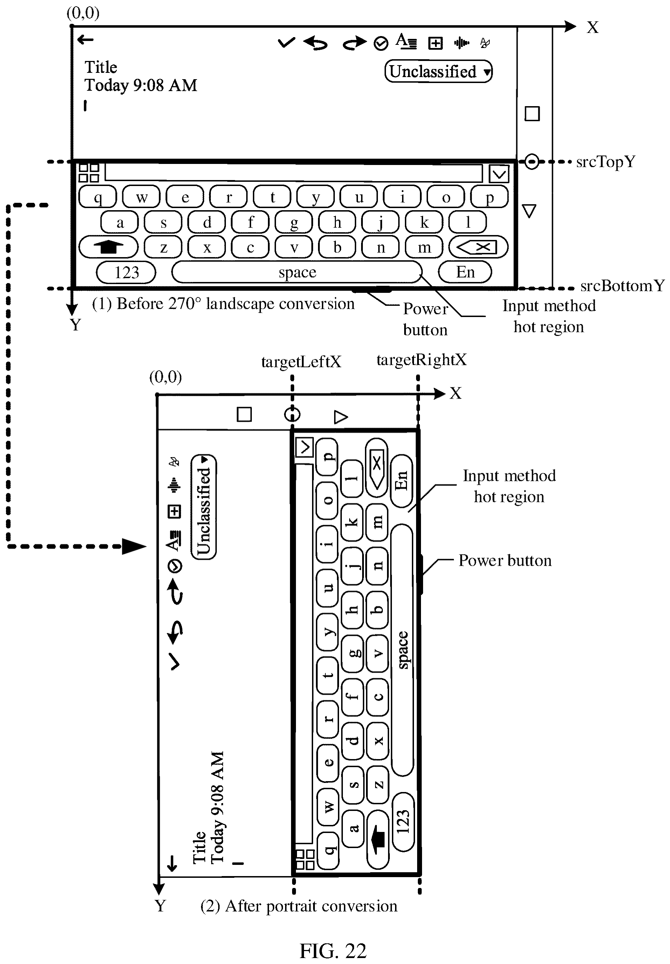

For a case of 270° landscape, referring to FIG. 22(1), Top existing before coordinate conversion may be still represented as srcTopY, and Bottom existing before coordinate conversion may be still represented as srcBottomY.

270° landscape needs to be rotated rightward by 270° to be recovered to portrait. After a coordinate system of 270° landscape is converted into a coordinate system of portrait, in other words, after FIG. 22(1) is converted into FIG. 22(2), Top obtained after portrait conversion may be represented as targetLeftX, and Bottom obtained after portrait conversion may be represented as targetRightX.

**It** may be learned, based on FIG. 22(1) and FIG. 22(2), that coordinate conversion of 270° landscape may be determined according to the following formula (4) and formula (5):

$$\text{targetLeftX}=\text{srcTopY} \quad \text{Formula (4);}$$

and

$$\text{targetRightX}=\text{srcBottomY} \quad \text{Formula (5).}$$

503. Perform resolution conversion.

When current resolution of the screen is not maximum resolution, logical coordinates provided by the input method module side cannot correspond to physical coordinates on the THP side (coordinate values are scaled), causing an error in determining a position of the input method hot region on the THP module side. This problem may cause a problem that a knuckle screenshot cannot be triggered in a region other than the input method region.

Therefore, in this embodiment, after converted coordinates are obtained, resolution conversion is further performed on the coordinates on the input method module side, to convert coordinates at low resolution into corresponding coordinates at maximum resolution.

For conversion formulas on which conversion from low resolution to high resolution is based may be the following shown formula (6) and formula (7):

$$\text{int xTarget}=(\text{int})((\text{float})\text{xSrc}*\text{maxResolution.x}/\text{currentResolution.x}+0.5) \quad \text{Formula (6);}$$

and

$$\text{int yTarget}=(\text{int})((\text{float})\text{ySrc}*\text{maxResolution.y}/\text{currentResolution.y}+0.5) \quad \text{Formula (7).}$$

xTarget and yTarget are a target X-axis coordinate value and a target Y-axis coordinate value that are obtained after conversion, xSrc and ySrc are an original X-axis coordinate value and an original Y-axis coordinate value that exist before conversion, maxResolution is the maximum resolution, and currentResolution is the current resolution.

504. A processed status and processed height values of the input method hot region.

In this way, after coordinate conversion and resolution conversion processing, the processed status and the processed height values of the input method hot region may be obtained.

In this case, the input method hot region information obtaining submodule may invoke a predefined input event management interface to send a command to the THP module.

Specifically, the predefined input event management interface may include a command field and command content. Both the command field and the command content may be defined as string (String) types.

As a possible implementation, the predefined input event management interface may be defined as, for example, HwInputManager.runHwTHPCommand (String command, String parameter).

Specifically, the parameter "command" in the foregoing interface represents the command field, and is used to determine a command type and establish a dedicated command channel.

Specifically, in this embodiment, a newly extended command field may be represented as "THP_SetInput-MethodRegion".

The parameter "parameter" represents the command content, and includes coordinate data "status heightLow heightHigh" (separated by spaces) that is of the input method hot region and that needs to be transmitted to the THP module.

status represents a landscape/portrait state of the current screen, and heightLow and heightHigh represent height values of the input method hot region, provided that heightLow<=heightHigh.

For example, in a possible implementation, a parameter value may be distinguished based on status.

Specifically, when the input method hot region is in a called-out state and a screen status is 0° portrait, status=0, and a corresponding parameter value may be represented as "0 TopY BottomY".

When the input method hot region is in a called-out state and a screen status is 90°/270° portrait, status=1, and a corresponding parameter value may be represented as "1 LeftX RightX".

When the input method hot region is in a called-back state, regardless of whether landscape or portrait, status=-1.

It should be understood that the foregoing descriptions are merely examples listed for a better understanding of the technical solutions of this embodiment, and are not considered as a unique limitation on this embodiment.

In addition, it should be noted that, during specific implementation, the call-out state includes but is not limited to the following scenarios, so that the input method hot region (subsequently represented as an input method typing interface) is visible: A scenario in which the electronic device is switched from screen-off to screen-on and the input method typing interface is directly displayed on the screen; a scenario in which the user taps an input box and an input method pops up; and a scenario in which an input method layout changes with landscape/portrait of the mobile phone, including an actual landscape/portrait state of the input method interface when the screen is rotated to 180°.

It should be understood that the foregoing descriptions are merely examples listed for a better understanding of the technical solutions of this embodiment, and are not considered as a unique limitation on this embodiment.

In addition, it should be noted that, during specific implementation, the called-back state includes but is not limited to the following scenarios, so that the input method typing interface is invisible: switching from non-floating input method typing to a floating state; switching from input method typing to a stylus input method; and switching from Input method to another application.

It should be understood that the foregoing descriptions are merely examples listed for a better understanding of the technical solutions of this embodiment, and are not considered as a unique limitation on this embodiment.

In addition, it should be further noted that, for a landscape split-screen scenario, an input method hot region range in which the knuckle recognition algorithm is shielded is kept consistent with the effectiveness shielding range of the knuckle recognition algorithm in the implementation shown in FIG. 4B. The floating input method scenario is kept consistent with the implementation shown in FIG. 4B, and the knuckle recognition algorithm, a screenshot, or video filtering is not performed.

Therefore, operations on the input method module side are completed.

601. Determine coordinates of a touch point.

Specifically, when a touch operation is received, the THP module determines coordinates of a touch point.

602. Cache the status and the height values of the input method hot region.

Specifically, after obtaining a command whose command field is THP_SetInputMethodRegion, the THP module can obtain the status and the height values of the input method hot region by parsing the command content parameter.

After obtaining the status and the height values of the input method hot region, the THP module can record the status as status and respectively record the height values as heightLow and heightHigh, and update/write the status and the height values to/into a cache of the THP module, so that the THP module performs subsequent processing after obtaining the coordinates of the touch point.

603. Whether the touch point falls within the input method hot region.

After each touch operation, it is determined, based on height values that are of the input method hot region and that are obtained from the input method module side and touch coordinates (coordinates of a touch point) obtained through calculation based on original capacitances, whether the touch point falls within the input method hot region range.

For example, the coordinates of the touch point may be defined as (touchX, touchY), and a condition for determining whether the touch point falls within the input method hot region range may be as follows: When status=-1, False may be returned, and it specifically indicates that the touch point is not in the input method hot region range. When status=0, if heightLow<=touchY<=heightHigh, True may be returned, and it specifically indicates that the touch point is in the input method hot region range; otherwise, False is returned. When status=1, if heightLow<=touchX<=heightHigh, True may be returned; otherwise, False is returned.

It should be understood that the foregoing descriptions are merely examples listed for a better understanding of the technical solutions of this embodiment, and are not considered as a unique limitation on this embodiment.

Based on the foregoing determining condition, when it is determined that the touch point does not fall within the input method hot region, it may be determined that this determined filtering result is that the touch is not filtered, in other words, step 604 is performed; otherwise, the touch is filtered, in other words, step 605 is performed.

604. Not filter the touch.

605. Filter the touch.

The filtering result determined by the THP module based on the coordinates of the current touch point and the height values of the input method hot region may be transferred by using the Bitmap field in the foregoing embodiment, to be specific, invocation of the knuckle recognition algorithm is prevented in InputReader.

It should be understood that the foregoing descriptions are merely examples listed for a better understanding of the technical solutions of this embodiment, and are not considered as a unique limitation on this embodiment.

Therefore, according to the filtering procedure shown in FIG. 18, when recognizing that the coordinates corresponding to the touch operation are located in the input method hot region, the Input framework can prevent invocation of the knuckle recognition algorithm in a background program and an operation of obtaining ACC data through inter-core communication, thereby reducing unnecessary redundant actions, and reducing system load.

In addition, it should be noted that, to strengthen the filtering solution that is for the input method hot region and that is provided in this embodiment, a potential risk, for example, an input method program crashes, is addressed. In a possible implementation, a filtering status of the input method hot region may be reset by using a screen-on/off operation in the system, so that the user can enable, by performing a screen-on/off operation on the electronic device, the electronic device in an abnormal state to recover knuckle screenshot and screen recording capabilities.

For example, when an abnormal state occurs, after the user performs a screen-on/off operation on the electronic device, the electronic device completes the following operation: When the screen is off, the THP module clears cached values of the status and the height values of the input method hot region, and resets the status and the height values of the input method hot region to default values, for example, status=-1. In this way, after the screen of the electronic device is on, the electronic device can consider that currently there is no input method hot region, and then recover normal knuckle recognition logic.

It should be understood that the foregoing descriptions are merely examples listed for a better understanding of the technical solutions of this embodiment, and are not considered as a unique limitation on this embodiment.

In addition, it should be further understood that, to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. Persons skilled in the art may use different methods to implement the described functions with reference to embodiments for each particular application, but it should not be considered that the implementation goes beyond the scope of this application.

In addition, it should be noted that, in an actual application scenario, the touch operation processing method that is provided in the foregoing embodiments and that is implemented by the electronic device may alternatively be performed by a chip system included in the electronic device. The chip system may include a processor. The chip system may be coupled to a memory, so that when the chip system runs, a computer program stored in the memory is invoked, to implement the foregoing touch operation processing method performed by the electronic device. The processor in the chip system may be an application processor or a processor that is not an application processor.

In addition, an embodiment of this application further provides a computer-readable storage medium. The computer storage medium stores computer instructions. When the computer instructions are run on an electronic device, the electronic device is enabled to perform the foregoing related method steps to implement the touch operation processing method in the foregoing embodiments.

In addition, an embodiment of this application further provides a computer program product. When the computer program product runs on an electronic device, the electronic device is enabled to perform the foregoing related steps to implement the touch operation processing method in the foregoing embodiments.

In addition, an embodiment of this application further provides a chip (which may alternatively be a component or a module). The chip may include one or more processing circuits and one or more transceiver pins. The transceiver pin and the processing circuit communicate with each other through an internal connection path. The processing circuit performs the foregoing related method steps to implement the touch operation processing method in the foregoing embodiments, to control a receive pin to receive a signal and control a transmit pin to send a signal.

In addition, it may be learned, based on the foregoing descriptions, that each of the electronic device, the computer-readable storage medium, the computer program product, or the chip provided in the embodiments of this application is configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

The foregoing embodiments are merely intended to describe the technical solutions of this application, but not intended to limit this application. Although this application is described in detail with reference to the foregoing embodiments, persons of ordinary skill in the art should understand that they can still make modifications to the technical solutions described in the foregoing embodiments or make equivalent replacements to some technical features thereof, without departing from the scope of the technical solutions of the embodiments of this application.

**Claims**

1. A touch operation processing method, applied to an electronic device, wherein the method comprises:

   receiving a first operation of a user;
   presenting a first interface of a first application in response to the first operation, wherein the first interface comprises a first region and a second region, and the first region is a distribution region of a keyboard corresponding to an input method in the first interface;
   receiving a second operation of the user in the first region; and
   presenting input information of the user in the first region in response to the second operation, wherein
   when the second operation is received, a knuckle recognition algorithm is not invoked to perform recognition processing on the second operation.

2. The method according to claim 1, wherein the method further comprises:

   receiving a third operation of the user in the second region; and
   invoking the knuckle recognition algorithm to recognize the third operation, to obtain a recognition result of the third operation.

3. The method according to claim 1, wherein the method further comprises:

   receiving a fourth operation of the user;
   switching the first interface to a second interface in response to the fourth operation,
   wherein the second interface does not comprise the first region;
   receiving a fifth operation of the user in the second interface; and
   invoking the knuckle recognition algorithm to recognize the fifth operation, to obtain a recognition result of the fifth operation.

4. The method according to claim 2 or 3, wherein the invoking the knuckle recognition algorithm to perform recognition processing on the received operation comprises:

   determining a value of a first identifier corresponding to the received operation, wherein the first identifier is used to indicate whether to skip invoking the knuckle recognition algorithm; and
   when the first identifier is a first value, not invoking the knuckle recognition algorithm to perform recognition processing on the received operation; or
   when the first identifier is a second value, invoking the knuckle recognition algorithm to perform recognition processing on the received operation.

5. A touch operation processing method, applied to an electronic device, wherein the method comprises:

   receiving a first touch operation of a user;
   detecting the first touch operation, to obtain a number of touch points corresponding to the first touch operation;
   generating a first identifier based on the number of touch points, wherein the first identifier is used to indicate whether to skip invoking a knuckle recognition algorithm; and
   when the first identifier is a first value, not invoking, by the electronic device, the knuckle recognition algorithm to perform recognition processing on the first touch operation; or
   when the first identifier is a second value, invoking, by the electronic device, the knuckle recognition algorithm to perform recognition processing on the first touch operation.

6. The method according to claim 5, wherein the generating a first identifier based on the number of touch points comprises:

   when the number of touch points is greater than a preset number, generating the first identifier of the first value;

when the number of touch points is equal to the preset number, generating the first identifier of the second value; or

when the number of touch points is less than the preset number, generating the first identifier based on capacitance data corresponding to the first touch operation.

7. The method according to claim 6, wherein the generating the first identifier based on capacitance data corresponding to the first touch operation comprises:

obtaining original capacitance data corresponding to the first touch operation, wherein the original capacitance data is capacitance data that is not processed by using a touch processing algorithm;
determining, based on the touch processing algorithm and the original capacitance data, a pressure value corresponding to the first touch operation; and
generating the first identifier based on the pressure value.

8. The method according to claim 7, wherein the determining, based on the touch processing algorithm and the original capacitance data, a pressure value corresponding to the first touch operation comprises:

determining a touch center point of the first touch operation based on the touch processing algorithm and the original capacitance data, wherein the touch center point is a point with a maximum capacitance;
obtaining a capacitance of the touch center point and capacitances of M neighboring points adjacent to the touch center point from the original capacitance data, wherein M is an integer greater than 0;
performing weighted summation on the M+1 obtained capacitances based on a preset weight; and
multiplying a weighted summation result by a preset coefficient, to obtain the pressure value corresponding to the first touch operation.

9. The method according to claim 7, wherein the generating the first identifier based on the pressure value comprises:

when the pressure value is greater than a preset pressure threshold, generating the first identifier of the first value; or
when the pressure value is less than or equal to the preset pressure threshold, determining whether the capacitance data corresponding to the first operation is valid; and
when the capacitance data is valid, generating the first identifier of the second value; or
when the capacitance data is invalid, generating the first identifier of the first value.

10. The method according to claim 9, wherein the determining whether the capacitance data corresponding to the first operation is valid comprises:

determining a touch center point of the first touch operation based on the touch processing algorithm and the original capacitance data, wherein the touch center point is a point with a maximum capacitance;
determining a distance from the touch center point to an edge of a current screen of the electronic device based on a preset dimension N, wherein N is an odd number;
determining, based on coordinates of the touch center point, the distance, and maximum pixels of the current screen of the electronic device, whether the touch center point is located on the edge of the current screen of the electronic device; and
when the touch center point is not located on the edge of the current screen of the electronic device, determining that the capacitance data corresponding to the first operation is valid; or
when the touch center point is located on the edge of the current screen of the electronic device, determining that the capacitance data corresponding to the first operation is invalid.

11. The method according to claim 10, wherein the determining, based on coordinates of the touch center point, the distance, and maximum pixels of the current screen of the electronic device, whether the touch center point is located on the edge of the current screen of the electronic device comprises:

determining an X edge coordinate value of an X-axis and a Y edge coordinate value of a Y-axis based on the distance and the maximum pixels;
determining whether an X coordinate value of the touch center point on the X-axis is less than the distance, or determining whether the X coordinate value is greater than the X edge coordinate value;
determining whether a Y coordinate value of the touch center point on the Y-axis is less than the distance, or determining whether the Y coordinate value is greater than the Y edge coordinate value; and

when the X coordinate value is less than the distance or is greater than the X edge coordinate value, and the Y coordinate value is less than the distance or is greater than the Y edge coordinate value, determining that the touch center point is not located on the edge of the current screen of the electronic device;

otherwise, determining that the touch center point is located on the edge of the current screen of the electronic device.

12. The method according to claim 9, wherein the determining whether the capacitance data corresponding to the first operation is valid comprises:

extracting capacitance data from the original capacitance data based on the touch processing algorithm, and constructing a first capacitance matrix, wherein the first capacitance matrix is an N×N target capacitance matrix not padded with 0, and N is an odd number; and

when a number of pixels in the first capacitance matrix is less than or equal to a preset number of pixels, determining that the capacitance data corresponding to the first operation is invalid; or

when the number of pixels in the first capacitance matrix is greater than the preset number of pixels, determining that the capacitance data corresponding to the first operation is valid.

13. The method according to claim 9, wherein the determining whether the capacitance data corresponding to the first operation is valid comprises:

extracting capacitance data from the original capacitance data based on the touch processing algorithm, and constructing a first capacitance matrix, wherein the first capacitance matrix is an N×N target capacitance matrix not padded with 0, and N is an odd number;

when the first capacitance matrix is not an N×N capacitance matrix, performing 0 padding on the first capacitance matrix, to obtain the N×N target capacitance matrix;

obtaining capacitances of two vertices on a diagonal in the target capacitance matrix; and

determining, based on the capacitances of the two vertices on the diagonal, whether the capacitance data corresponding to the first operation is valid.

14. The method according to claim 13, wherein the obtaining capacitances of two vertices on a diagonal in the target capacitance matrix comprises:

obtaining capacitances of an upper left vertex and capacitances of a lower right vertex of the target capacitance matrix;

or

obtaining capacitances of an upper right vertex and capacitances of a lower left vertex of the target capacitance matrix.

15. The method according to claim 14, wherein the determining, based on the capacitances of the two vertices on the diagonal, whether the capacitance data corresponding to the first operation is valid comprises:

determining whether the capacitances of the two vertices on the diagonal are all valid capacitances; and

when the capacitances of the two vertices on the diagonal are all valid values, determining that the capacitance data corresponding to the first operation is valid.

16. The method according to any one of claims 13 to 15, wherein vertices in the target matrix comprise an edge corner point of the target matrix and a next vertex of the edge corner point along a diagonal; and

the determining whether the capacitances of the two vertices on the diagonal are all valid capacitances comprises:

determining whether two capacitances of each vertex on the diagonal have a non-0 value; and

when the two vertices on the diagonal each have a non-0 value, determining that the capacitance data corresponding to the first operation is valid.

17. The method according to any one of claims 5 to 16, wherein after the invoking, by the electronic device, the knuckle recognition algorithm to perform recognition processing on the first touch operation, the method further comprises:

when determining that the first touch operation is a knuckle operation, setting time corresponding to the first touch operation to system time at which the first touch operation is received; or

when determining that the first touch operation is not the knuckle operation, setting the time corresponding to the first touch operation to a default invalid value.

18. The method according to claim 17, wherein the method further comprises:

when receiving a second touch operation of the user, determining whether the time corresponding to the first touch operation is the default invalid value;

when the time corresponding to the first touch operation is not the default invalid value, determining a time interval between the two touch operations based on system time at which the second touch operation is received and the time corresponding to the first touch operation; and

when the time interval is less than a preset time interval threshold, setting the time corresponding to the first touch operation to the default invalid value, setting time corresponding to the second touch operation to the system time at which the second touch operation is received, and invoking the knuckle recognition algorithm to perform recognition processing on the second touch operation;

otherwise, generating, based on the number of touch points and/or capacitance data corresponding to the second touch operation, a second identifier corresponding to the second touch operation, wherein the second identifier is used to indicate whether to skip invoking the knuckle recognition algorithm; and

when the second identifier is a first value, not invoking, by the electronic device, the knuckle recognition algorithm to perform recognition processing on the second touch operation, and setting the time corresponding to the second touch operation to the default invalid value; or

when the second identifier is a second value, invoking, by the electronic device, the knuckle recognition algorithm to perform recognition processing on the second touch operation, and setting the time corresponding to the second touch operation to the system time at which the second touch operation is received.

19. The method according to claim 18, wherein the method further comprises:

when the time corresponding to the first touch operation is the default invalid value, generating, based on the number of touch points and/or capacitance data corresponding to the second touch operation, a second identifier corresponding to the second touch operation; and

when the second identifier is a first value, not invoking, by the electronic device, the knuckle recognition algorithm to perform recognition processing on the second touch operation, and setting the time corresponding to the second touch operation to the default invalid value; or

when the second identifier is a second value, invoking, by the electronic device, the knuckle recognition algorithm to perform recognition processing on the second touch operation, and setting the time corresponding to the second touch operation to the system time at which the second touch operation is received.

20. The method according to any one of claims 5 to 19, wherein the method further comprises:

when receiving the first touch operation, obtaining height values of an input method hot region and a status of the current screen of the electronic device, wherein the height values comprise a coordinate value corresponding to an upper edge and a coordinate corresponding to a lower edge of the input method hot region, the status comprises a portrait state and a landscape state, and the input method hot region is a distribution region of a keyboard corresponding to an input method in an interface currently displayed on the electronic device;

when the status is the landscape state, converting the height values into height values in a coordinate system corresponding to the portrait state;

performing resolution conversion on the height values in the coordinate system corresponding to the portrait state, to obtain target height values;

determining, based on the status and the target height values, a region of the input method hot region on the current screen of the electronic device; and

when coordinates of a touch point of the first touch operation fall within the region of the input method hot region on the current screen of the electronic device, generating the first identifier of the first value;

otherwise, generating the first identifier of the second value.

21. An electronic device, wherein the electronic device comprises a memory and a processor, and the memory is coupled to the processor; and the memory stores computer instructions, and when the computer instructions are executed by the processor, the electronic device is enabled to perform the touch operation processing method according to any one of claims 1 to 4, or perform the touch operation processing method according to any one of claims 5 to 20.

22. A computer-readable storage medium, comprising a computer program, wherein when the computer program runs on an electronic device, the electronic device is enabled to perform the touch operation processing method according to any one of claims 1 to 4, or perform the touch operation processing method according to any one of claims 5 to 20.

(1)                                    (2)

FIG. 1A

(1)

(2)

FIG. 1B

Electronic device 100

FIG. 2

Mobile phone 100

Mobile phone 100

Display
screen 194

Button 190
(power
button)

(1)

(2)

FIG. 3

FIG. 4A

EP 4 671 942 A1

APP layer — Smart screenshots | System interfaces | Settings

FWK layer — Input method module

Native layer — Input framework — 118

EventHub — 114 — InputReader — 117 — InputDispatcher
115 | 116
Knuckle module

111
119

HAL — aptouch_daemon — THP module — 103.2 — 104
QMI inter-core communication — 106/106' — QMI inter-core communication — 106/106'
106/106'
sensors-hal — Sensor client manager
Sensor subsystem framework

103.1 — 102 — 105 — 107 — 110

Kernel layer — TP driver
dev/input/ | Coordinate node | Capacitance node | /dev/thp*
112
Capacitance data cache — 101

Knuckle driver
ACC data obtaining node — 106/106'

Knuckle virtual Sensor driver — 128 sets of ACC data cache — 109 — 108 — ACC driver — ACC data cache
Sensor subsystem driver

113

Original ACC data

Hardware — TP IC — Capacitance sampling module
ACC component — ACC data sampling module — Hardware

Data channel, where the arrow represents a data flow direction

Command channel, where the arrow represents a control direction

Data and command bidirectional channel

FIG. 4B

AP side

SensorHub side

**APP layer**

| Smart screenshots | System interfaces | Settings |

**FWK layer**

Input method module

Input method hot region information obtaining submodule

**Native layer**

Input framework

| EventHub | InputReader | InputDispatcher |

Knuckle module

**HAL**

aptouch_daemon

THP module

Knuckle filtering algorithm

QMI inter-core communication

sensors-hal

QMI inter-core communication

Sensor client manager

Sensor subsystem framework

**Kernel layer**

TP driver

| dev/input/ | Coordinate node | Capacitance node | /dev/thp* |

Bitmap field

Capacitance data cache

Knuckle driver

ACC data obtaining node

Knuckle virtual Sensor driver

128 sets of ACC data cache

ACC driver

ACC data cache

Sensor subsystem driver

**Hardware**

TP IC

Capacitance sampling module

ACC component

ACC data sampling module

Hardware

FIG. 5

Touch position

| $V_0$ | $V_1$ | $V_2$ |
|-------|-------|-------|
| $V_3$ | $V_4$ | $V_5$ |
| $V_6$ | $V_7$ | $V_8$ |

(2)

(1)

FIG. 6

[19315.228484] /dev/input/event9: EV_ABS    ABS_MT_POSITION_X    0000132e
[19315.228484] /dev/input/event9: EV_ABS    ABS_MT_POSITION_Y    000032fe
[19315.228484] /dev/input/event9: EV_ABS    ABS_MT_PRESSURE    00000310
[19315.228484] /dev/input/event9: EV_ABS    ABS_MT_TRACKING_ID    0000132e
[19315.228484] /dev/input/event9: EV_ABS    ABS_MT_TOUCH_MAGOR    0000132e
[19315.228484] /dev/input/event9: EV_ABS    ABS_MT_TOUCH_MINOR    0000132e

Corresponding decimal: 784

FIG. 7

EP 4 671 942 A1

```
C: \Users\z00013140>adb shell tpd roidata
0       0       0       0       0       0       0
0       0       0       0       0       0       0
0       0       0       0       0       0       0
46      198     674     1206    1070    341     177
12      40      234     362     282     91      20
11      15      52      85      49      -13     11
2       -18     -2      17      4       -27     -11
```

(1) Sliding from an upper side

```
C: \Users\z00013140>adb shell tpd roidata
-18     -19     1       25      7       -17     -18
-16     15      50      98      35      0       -11
-3      86      513     761     249     42      3
52      578     2314    2426    1007    131     30
43      791     1869    1954    755     161     31
0       0       0       0       0       0       0
0       0       0       0       0       0       0
```

(2) Sliding from a lower side

```
C: \Users\z00013140>adb shell tpd roidata
0       0       0       242     108     37      0
0       0       0       1211    446     130     38
0       0       0       1654    828     214     82
0       0       0       1735    933     255     83
0       0       0       812     442     173     64
0       0       0       110     115     83      15
0       0       0       -9      11      25      -8
```

(3) Sliding from a left side

```
C: \Users\z00013140>adb shell tpd roidata
0       -15     14      59      73      0       0
18      18      116     727     838     0       0
44      80      617     2285    1990    0       0
50      104     914     2398    2078    0       0
44      65      415     1927    1864    0       0
3       26      97      386     407     0       0
0       -11     16      60      26      0       0
```

(4) Sliding from a right side

FIG. 8

Screen touch

201.
Whether TouchNum is
greater than 2

No

Yes

202.
Whether TouchNum is
equal to 2

No

Yes

203.
Whether a
pressure value is greater than a
preset pressure
threshold

Yes

No

204.
Whether target capacitance
data is valid

No

206. Filter the single touch

Yes

205. Not filter the single touch

Filtering procedure for a non-knuckle operation in a single screen touch operation

FIG. 9

FIG. 10

Upper left vertex — Upper right vertex

**(1)**

| | | | | | | |
|---|---|---|---|---|---|---|
| 0 | 0 | 0 | 0 | 0 | 0 | 0 |
| 0 | 0 | 0 | 0 | 0 | 0 | 0 |
| 0 | 0 | 0 | 0 | 0 | 0 | 0 |
| 46 | 198 | 647 | 1206 | 1070 | 342 | 177 |
| 12 | 40 | 234 | 362 | 282 | 91 | 20 |
| 11 | 15 | 52 | 85 | 49 | −13 | 11 |
| 2 | −18 | −2 | 17 | 4 | −27 | −11 |

Lower left vertex — Lower right vertex

Upper left vertex — Upper right vertex

**(2)**

| | | | | | | |
|---|---|---|---|---|---|---|
| −18 | −19 | 1 | 25 | 7 | −17 | −18 |
| −16 | 15 | 50 | 98 | 35 | 0 | −11 |
| −3 | 86 | 513 | 761 | 249 | 42 | 3 |
| 52 | 578 | 2314 | 2426 | 1007 | 131 | 30 |
| 43 | 791 | 1869 | 1954 | 755 | 161 | 31 |
| 0 | 0 | 0 | 0 | 0 | 0 | 0 |
| 0 | 0 | 0 | 0 | 0 | 0 | 0 |

Lower left vertex — Lower right vertex

Upper left vertex — Upper right vertex

**(3)**

| | | | | | | |
|---|---|---|---|---|---|---|
| 0 | 0 | 0 | 242 | 108 | 37 | 0 |
| 0 | 0 | 0 | 1211 | 446 | 130 | 38 |
| 0 | 0 | 0 | 1654 | 828 | 214 | 82 |
| 0 | 0 | 0 | 1735 | 933 | 255 | 83 |
| 0 | 0 | 0 | 812 | 442 | 173 | 64 |
| 0 | 0 | 0 | 110 | 115 | 83 | 15 |
| 0 | 0 | 0 | −9 | 11 | 25 | −8 |

Lower left vertex — Lower right vertex

Upper left vertex — Upper right vertex

**(4)**

| | | | | | | |
|---|---|---|---|---|---|---|
| 0 | −15 | 14 | 59 | 73 | 0 | 0 |
| 18 | 18 | 116 | 727 | 838 | 0 | 0 |
| 44 | 80 | 617 | 2285 | 1990 | 0 | 0 |
| 50 | 104 | 914 | 2398 | 2078 | 0 | 0 |
| 44 | 65 | 415 | 1927 | 1864 | 0 | 0 |
| 3 | 26 | 97 | 386 | 407 | 0 | 0 |
| 0 | −11 | 16 | 60 | 26 | 0 | 0 |

Lower left vertex — Lower right vertex

FIG. 11

Upper left vertex                    Upper right vertex

Lower left vertex                    Lower right vertex

FIG. 12

Coordinate      0     1     2     3     4     5     6

Dis_R

Relative position | −3 | −2 | −1 | peak | +1 | +2 | +3 |

Dis_L

Left boundary of      Right boundary of
two columns of 0     two columns of 0

FIG. 13

Left edge (p_x<2)                              Right edge (p_x>7)

| 0 | 1 | 2 | 3 | 4 | 5 | 6 | 7 | 8 | 9 |

Middle region

FIG. 14

(n+1)<sup>th</sup> screen touch (values of T1 and
T2 are set to −1 in an initialization stage)

301. T1!=−1? ──────────────No

Yes

302. T2=current time

303. T2−T1<delta? ──No─ 305.
Whether to perform
single filtering? ──Yes→ 307. T1=−1

Yes

304. T1=−1

No

306. T1=current time

Filter the
(n+1)<sup>th</sup> touch

Not filter the (n+1)<sup>th</sup> touch

Filtering procedure for a non-knuckle operation in two consecutive screen touch operations

FIG. 15

Indicate whether to filter this touch
1: not filter; 0: filter

| 0 | 0 | ... | 0 | 0 | 1 |
|---|---|-----|---|---|---|
| 31st bit | 30th bit | ... | 2nd bit | 1st bit | 0th bit |

Bitmap field of 32 bits

FIG. 16

aptouch_daemon

THP module

TP driver

Coordinate node | dev/input/ node

Input framework

EventHub | InputReader

401. Each time aptouch_daemon senses a touch performed by a user on a screen, the THP module invokes a knuckle filtering algorithm to determine whether the current touch is a touch operation that needs to be filtered (a determining result is recorded as not_bypass information)

402. aptouch_daemon delivers the determined not_bypass information to the coordinate node in the TP driver through the THP module

not_bypass information →

403. The TP driver fills the not_bypass information in the $0^{th}$ bit of a Bitmap field, and writes the Bitmap field into the coordinate node

404. The TP driver writes related data (including data of the Bitmap field) in the coordinate node into the dev/input/ node

—Related data→

405. The TP driver generates an Input event based on the related data cached in the dev/input/ node

—————Input event————→

406. InputReader reads the not_bypass information in the $0^{th}$ bit in the Bitmap field

407. Whether the not_ bypass information is 1

Yes

No

408. Invoke a knuckle recognition algorithm

409. Not invoke the knuckle recognition algorithm

FIG. 17

Input method module side

```
501. Obtain height values (Top
and Bottom) of an input method
        hot region
            │
            ▼
502. Perform coordinate
        conversion
            │
            ▼
503. Perform resolution
        conversion
            │
            ▼
504. A processed status and
processed height values of the
    input method hot region
```

Input method hot region information
obtaining submodule

THP module side

Screen
touch → 601. Determine
coordinates of a
touch point

603.
Whether the touch
point falls within the input
method hot region

No

Yes

604. Not filter the
touch

605. Filter the
touch

Inter-process
communication IPC →

602. Cache the status
and the height values
of the input method
hot region

FIG. 18

Interface 10a

(0,0)

Title
Today 9:08 AM

Unclassified ▼

List  Style  Insert  Record  Handwrite

Title
Today 9:08 AM

Unclassified ▼

List  Style  Insert  Record  Handwrite

TopY

Input method
hot region

BottomY

(1)

(2)

FIG. 19

Interface 10a

Power button

Title

Unclassified ▼

Today 9:08 AM

| q | w | e | r | t | y | u | i | o | p |

| a | s | d | f | g | h | j | k | l |

| z | x | c | v | b | n | m |

| 123 | space | En |

(1) 90° landscape

Interface 10a

Title

Unclassified ▼

Today 9:08 AM

| q | w | e | r | t | y | u | i | o | p |

| a | s | d | f | g | h | j | k | l |

| z | x | c | v | b | n | m |

| 123 | space | En |

Power button

(2) 270° landscape

FIG. 20

(1) Before 90° landscape conversion

(2) After portrait conversion

FIG. 21

(1) Before 270° landscape conversion

(2) After portrait conversion

FIG. 22

## INTERNATIONAL SEARCH REPORT

| | |
|---|---|
| International application No. | |
| | **PCT/CN2023/118859** |

**A.  CLASSIFICATION OF SUBJECT MATTER**

G06F3/0484(2022.01)i；  G06F3/0488(2022.01)i；  G06F3/01(2006.01)i；  G06F3/041(2006.01)i

According to International Patent Classification (IPC) or to both national classification and IPC

**B.  FIELDS SEARCHED**

Minimum documentation searched (classification system followed by classification symbols)

IPC：  G06F3/-

Documentation searched other than minimum documentation to the extent that such documents are included in the fields searched

Electronic data base consulted during the international search (name of data base and, where practicable, search terms used)

CNTXT, ENTXTC, DWPI, IEEE, 万方, WANFANG, 互联网检索, INTERNET SEARCH: 界面, 区域, 显示, 展示, 分布, 布局, 键盘, 输入, 敲入, 键入, 指关节, 识别, 检测, 触摸点, 个数, 数量, 标识, INTERFAC+, REGION, SHOW+, DISPLAY+, DISTRIBUT+, LAYOUT, KEYBOARD, INPUT+, TYPE, FINGER, KNUCKLE, IDENTIF+, DETECT+, RECOGN+, TOUCH +, POINT+, COUNT+, QUANTIT+, AMOUNT

**C.  DOCUMENTS CONSIDERED TO BE RELEVANT**

| Category* | Citation of document, with indication, where appropriate, of the relevant passages | Relevant to claim No. |
|---|---|---|
| A | CN 106775296 A (YULONG COMPUTER TELECOMMUNICATION SCIENTIFIC (SHENZHEN) CO., LTD.) 31 May 2017 (2017-05-31) description, paragraphs 46-72 | 1-22 |
| A | CN 106445120 A (HUAWEI TECHNOLOGIES CO., LTD.) 22 February 2017 (2017-02-22) entire document | 1-22 |
| A | CN 112445410 A (BEIJING XIAOMI MOBILE SOFTWARE CO., LTD.) 05 March 2021 (2021-03-05) entire document | 1-22 |
| A | CN 113919390 A (HUAWEI TECHNOLOGIES CO., LTD.) 11 January 2022 (2022-01-11) entire document | 1-22 |
| A | CN 116048350 A (HONOR TERMINAL CO., LTD.) 02 May 2023 (2023-05-02) entire document | 1-22 |
| A | US 2022084029 A1 (NCR CORP.) 17 March 2022 (2022-03-17) entire document | 1-22 |

☐ Further documents are listed in the continuation of Box C.  ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 March 2024** | **29 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/118859**

| Patent document cited in search report | | | Publication date (day/month/year) | Patent family member(s) | | | Publication date (day/month/year) |
|---|---|---|---|---|---|---|---|
| CN | 106775296 | A | 31 May 2017 | CN | 106775296 | B | 16 April 2021 |
| CN | 106445120 | A | 22 February 2017 | WO | 2018041250 | A1 | 08 March 2018 |
| CN | 112445410 | A | 05 March 2021 | CN | 112445410 | B | 18 April 2023 |
| CN | 113919390 | A | 11 January 2022 | WO | 2023051411 | A1 | 06 April 2023 |
| CN | 116048350 | A | 02 May 2023 | CN | 116048350 | B | 08 September 2023 |
| US | 2022084029 | A1 | 17 March 2022 | US | 11551217 | B2 | 10 January 2023 |

Form PCT/ISA/210 (patent family annex) (July 2022)